(19) Europäisches Patentamt
European Patent Office
Office européen des brevets

(11) **EP 4 519 662 B1**

(12) **EUROPÄISCHE PATENTSCHRIFT**

(45) Veröffentlichungstag und Bekanntmachung des Hinweises auf die Patenterteilung:
**03.09.2025 Patentblatt 2025/36**

(21) Anmeldenummer: **24720078.5**

(22) Anmeldetag: **15.04.2024**

(51) Internationale Patentklassifikation (IPC):
**G01N 25/18** (2006.01)  **G01N 27/18** (2006.01)

(52) Gemeinsame Patentklassifikation (CPC):
**G01N 27/18; G01N 25/18**

(86) Internationale Anmeldenummer:
**PCT/EP2024/060141**

(87) Internationale Veröffentlichungsnummer:
**WO 2024/218034 (24.10.2024 Gazette 2024/43)**

(54) **SENSORELEMENT MIT MEMBRAN UND KOMBINIERTEN HEIZ- UND TEMPERATURMESS-LEITERBAHNEN**

SENSOR ELEMENT WITH MEMBRANE AND COMBINED HEATING AND TEMPERATURE-MEASURING CONDUCTOR PATHS

ÉLÉMENT CAPTEUR À MEMBRANE ET TRAJETS CONDUCTEURS COMBINÉS DE CHAUFFAGE ET DE MESURE DE TEMPÉRATURE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **17.04.2023 DE 102023109571**

(43) Veröffentlichungstag der Anmeldung:
**12.03.2025 Patentblatt 2025/11**

(60) Teilanmeldung:
**25181995.9 / 4 597 091**

(73) Patentinhaber: **ARCHIGAS GMBH**
**65428 Rüsselsheim (DE)**

(72) Erfinder:
• KAUFMAN, Illya
  **60598 Frankfurt/Main (DE)**
• BARSKYI, Wladimir
  **60435 Frankfurt/Main (DE)**
• VÖLKLEIN, Friedemann
  **65527 Niedernhausen (DE)**

(74) Vertreter: **Osterhoff, Utz**
**Bockermann Ksoll**
**Griepenstroh Osterhoff**
**Patentanwälte**
**Bergstraße 159**
**44791 Bochum (DE)**

(56) Entgegenhaltungen:
**WO-A1-2022/268896    DE-A1- 102015 222 072**

**Beschreibung**

Die Erfindung betrifft ein Sensorelement zur Messung von thermischen Eigenschaften eines fluiden Mediums, insbesondere zur Messung der Wärmeleitfähigkeit und/oder dem Wasserstoffgasgehalt, dem Kohlenwasserstoffgas-Gehalt oder dem Heliumgehalt eines fluiden Mediums. Die Erfindung betrifft auch einen Sensor aufweisend ein solches Sensorelement und ein Verfahren zur Bestimmung mindestens einer thermischen Eigenschaft eines fluiden Mediums, insbesondere der thermischen Wärmeleitfähigkeit und/oder des Wasserstoff-Gehalts, des Kohlenwasserstoffgas-Gehalts oder des Heliumgehalts des fluiden Mediums.

**Technischer Hintergrund**

Die Erfindung betrifft insbesondere ein Sensorelement und ein Verfahren zur Bestimmung der Wasserstoffkonzentration in einem feuchten Sauerstoff-Gas-Gemisch oder einem feuchten Luft-Gas-Gemisch mit Hilfe der Wärmeleitfähigkeit des Sauerstoff- oder Luft-Gas-Gemischs und vor allem die Anwendung des Verfahrens und die Einsetzbarkeit des Sensorelements bei schwankenden Verhältnissen der einzelnen Luftbestandteile sowie des Feuchtigkeitsgehalts des Luft-Gas-Gemischs oder Sauerstoff-Gas-Gemischs. Das fluide Medium kann also bevorzugt ein Gas, insbesondere ein Luft-Gas-Gemisch sein.

Wärmeleitungsmessungen werden bereits seit langem in der industriellen Gasanalyse zur Bestimmung der Gaskonzentration in binären oder quasibinären Gasgemischen eingesetzt. Bei einem binären Gemisch handelt es sich um eine Mischung aus genau zwei verschiedenen Gasen in beliebigen Verhältnissen. Wenn eine Messkomponente aus mehreren Gasen besteht, die sich hinsichtlich ihrer Wärmeleitfähigkeit wie ein einziges Gas verhalten, spricht man bei einer binären Messung der Gasgemische von einem quasibinären Gasgemisch. Dies ist der Fall, wenn diese Komponenten dauerhaft in unveränderten Verhältnissen bleiben, wie zum Beispiel bei trockener, atmosphärischer Luft, oder wenn die Komponenten dieser Mischung die gleiche Wärmeleitfähigkeit haben.

Die Wärmeleitfähigkeit beschreibt eine physikalische Eigenschaft, die angibt, wie gut eine Substanz Wärme leiten kann. Die Wärmeleitfähigkeitswert ist temperaturabhängig, und für jedes Gas gibt es eine spezifische, experimentell bestimmte Kennzahl $\lambda(T)$, die in Watt pro Meter und Kelvin (W/(m K)) ausgedrückt wird.

Die Messmethode basiert auf der Bestimmung der Wärmeleistung Q, wobei eine Wärmequelle über das umgehende Gas Wärmeenergie an eine Wärmesenke ableitet. Die Wärmeleistung und die Messung werden durch die definierte Geometrie und die Wärmeleitfähigkeit (eine stoffspezifische Funktion der Temperatur) beschrieben:

$$Q = \lambda(T) \frac{A\,(T_q - T_s)}{d}$$

Darin ist

A die Fläche der Wärmequelle (definierte freihängende Fläche, die durch das Heizelement elektrisch beheizt wird),
d ein definierter (und gleichbleibender) Abstand zwischen Wärmequelle und Wärmesenke (die Wände der Messkammer), wobei die Wände auch auf Übertemperatur beheizt werden können,
$T_q$ die Temperatur der Wärmequelle und
$T_s$ die Temperatur der Wärmesenke.

Die elektrische Leistung, die erforderlich ist, um die Wärmequelle auf einer bestimmten Temperatur zu halten, ist proportional zur Wärmeleitfähigkeit des gemessenen Gases. Diese elektrische Leistung wird als Messsignal verwendet.

Für die Messung werden unter anderem siliziumbasierte mikromechanische Sensoren beziehungsweise Mikro-Elektromechanische Systeme (Micro-Electro-Mechanical System - MEMS) verwendet. Bei diesen Sensoren beziehungsweise MEMS kann eine hohe Genauigkeit und eine hohe Reproduzierbarkeit der geometrischen Parameter A und d erzielt werden. Dadurch soll eine hohe Reproduzierbarkeit der Messergebnisse erzielt werden. Die Korrelation des Wärmeleitfähigkeitssignals mit dem Gemisch aus zwei Gasen ergibt die Konzentrationsmessung.

Nachteilig an den bekannten Sensoren und Sensorelementen, deren Funktionsprinzip auf der Messung der Wärmeleitfähigkeit des umgebenden Gases basiert, ist, dass wenn ein weiteres Gas in dem binären Gasgemisch auftritt, erhält man ein undefiniertes Signal, das nicht eindeutig der Konzentration der Gase zugeordnet werden kann. Bei vielen Anwendungen, bei denen die Wasserstoffkonzentration bestimmt werden muss, sind die Gasgemische nicht rein binär. Ein weiterer Nachteil einer auf MEMS-Technologie basierenden Messmethode ist, dass der Sensor bei einer Kontamination mit Kondensat sofort irreversible Schäden erleidet.

Der sicherheitstechnischen Überwachung der Wasserstoffkonzentration muss immer mehr Aufmerksamkeit gewidmet werden. Dazu gehört die Überwachung der unteren oder oberen Explosionsgrenze (UEG oder OEG). Dabei wird der Wasserstoffgehalt in Luft oder in Sauerstoff oder Luft- bzw. Sauerstoffgehalt in Wasserstoff gemessen. Während der Messung kann sich die Luftzusammensetzung ändern, insbesondere durch die Anreicherung oder Abgabe von Feuchtigkeit im Messgas, das heißt, durch eine Zunahme oder Abnahme der $H_2O$-Konzentration im Messgas. Verbreitete Applikationen für diese Messaufgaben liegen im Bereich der Elektrolyse oder der Abgas-Bestimmung von Brennstoffzellen. Um den Einfluss der Luftfeuchtigkeit auf die Messung mittels Wärmeleitfähigkeit zu eliminieren, wird derzeit entweder eine Gastrocknung durchgeführt, was zu einer Verfälschung der gemessenen Probe führt, oder es wird zusätzlich eine Feuchtmessung durchgeführt, um den Einfluss zu kompensieren. Oft wird beides verwendet. Das macht die Einrichtung der Messung und den Service solcher Sensoren kompliziert und teuer.

## Stand der Technik

Aus der EP 0 285 833 A2 ist ein Verfahren zur Bestimmung der Gaskonzentration in einem Gasgemisch durch Messung der Wärmeleitfähigkeit des Gasgemischs bekannt. Die Wärmeleitfähigkeit des Gasgemischs wird bei so vielen Gastemperaturen gemessen, die der Anzahl der Gaskomponenten weniger Eins entspricht. Dies macht eine Vielzahl von Messungen bei unterschiedlichen Temperaturen erforderlich. Aus den ermittelten Messwerten der Wärmeleitfähigkeit werden anschließend die einzelnen Gaskonzentrationen berechnet. Zur Messung der Wärmeleitfähigkeiten des Gasgemischs bei verschiedenen Gastemperaturen wird ein Sensor verwendet, wobei der Sensor aus einer Silizium-Trägerplatte mit aufgeätzten Dünnfilmwiderständen, auf der eine Deckplatte ruht, besteht. In dem Sensor ist ein Kanal ausgebildet, mit dem das Gasgemisch zur Messkammer gelangen kann. Der Sensor weist eine Isolatorschicht auf, durch die Wärme abfließen kann, was das Messergebnis negativ beeinflussen kann, weil die eigentliche Messgröße dadurch verschleiert wird. Zudem können in der Isolatorschicht thermische Spannungen auftreten, was zu Problemen bei hohen Temperaturen führt.

Die DE 10 2015 222 072 A1 offenbart eine Heizvorrichtung für einen Sensor in MEMS-Ausführung, bei dem ein Dünnschicht-Heizelement mit einer speziellen Geometrie verwendet wird, um eine im Wesentlichen konstante elektrische Stromdichte auszubilden.

Die DE 10 2015 222 072 A1 geht dabei von einem Stand der Technik aus, bei dem eine Membran auf einem Chip beziehungsweise Träger aufgebracht ist, wobei das Chipmaterial bereichsweise entfernt ist. Hierdurch ist die Membran an den Chip gekoppelt, wodurch es zu einer inhomogenen Wärmeableitung und Temperaturverteilung auf der Membran kommen kann, die die spezielle Geometrie des Dünnschicht-Heizelements zur homogeneren Verteilung der Temperatur auf der Membran erforderlich macht. Eine Temperaturmessung wird nicht thematisiert.

Die DE 10 2016 200 267 A1 offenbart eine Vorrichtung zum Detektieren eines Gases, bei der zwei Heizelemente auf Membranen angeordnet sind und die Messung aufgrund eines Vergleichs erfolgt. Diese Ausführung bietet keinen Schutz gegen Kondensation oder eine Lösung für die Querempfindlichkeit bei hohem Feuchtigkeitsgehalt. Außerdem erschweren die übereinander angeordneten Membranen die hermetische Abdichtung des Sensors zum Schutz gegen aggressive Umgebungen.

Aus der US 2015/00972600 A1 ist ein Wärmeleitungssensor auf einem Silizium-Wafer bekannt, der eine Wärmeübertragungsvertiefung mit flachem Boden aufweist. Eine Besonderheit dieses Sensors ist, dass die Wärmeübertragungskavität so gestaltet ist, dass keine natürliche Konvektion im Inneren stattfindet und der Wärmetransfer ausschließlich durch die thermische Leitfähigkeit des in der Kavität befindlichen Gases erfolgt. Jedoch führt der Aufbau zu einer undefinierten Wärmeübertragung oberhalb der Membran. Dies kann zu Konvektionen oberhalb des Sensors führen und die Wärmeübertragung zum Kompensationswiderstand ohne Abdeckung kann eine positionsabhängige Messung verursachen. Zusätzlich bietet diese Ausführung keinen Schutz gegen Kondensation sowie keine Reduktion der Querempfindlichkeit gegen Feuchte.

Die DE 101 44 873 A1 offenbart einen Wärmeleitfähigkeitssensor mit einer porösen Abdeckung. Die Konstruktion bietet einen grundlegenden Schutz gegen äußere Einflüsse und Kondensation. Bei einem hohen Feuchtigkeits- oder Kondensatgehalt kann jedoch die Benetzung der porösen Struktur den Gaszugang blockieren.

Die DE 10 2005 058 832 B4 offenbart einen verbesserten beheizten H2-Sensor, der durch externe Beheizung des Messraums die Einflüsse von Feuchtigkeit reduziert und dadurch präzisere Messungen von Wasserstoff in gasförmigen Medien ermöglicht. Durch die externe Beheizung des Gehäuses, wird eine hohe elektrische Leistung erforderlich. Zudem ist ein vollständiges Ausdampfen von Kondensat nicht sichergestellt, sodass Flüssigkeit zur Membran gelangen könnte.

Aus der JP 2010-266265 A geht ein verbesserter Gasdetektor hervor, der die Genauigkeit der Detektion brennbarer Gase erhöht, indem er Messwerte anhand der erfassten atmosphärischen Temperatur anpasst, um Feuchtigkeitseinflüsse zu berücksichtigen, und zudem eine Heizvorrichtung verwendet, um Kondensationsschutz zu gewährleisten. Diese Lösung erfordert zusätzliche Temperaturkorrekturen, um den Feuchteinfluss zu kompensieren, und ist abhängig von präzisen Temperaturmessungen, was die Handhabung des Sensors und die Auswertung der Sensordaten aufwendig gestaltet. Zudem bietet das System keinen vollständigen Schutz gegen Kondensation, da kein aktives Ausdampfen von Kondensat erfolgt, was die Zuverlässigkeit in feuchten Umgebungen einschränken könnte. Zusätzlich umfasst die Lösung einzelne Sensoren und Komponenten, die manuell zusammenmontiert werden müssen, was den Herstellungsprozess kompliziert und die Reproduzierbarkeit der Produktion potenziell einschränkt, was auch zu niedrigeren Produktionszahlen führen kann.

Die DE 10 2015 207 879 A1 beschreibt eine Sensorvorrichtung, die durch ein beheiztes Dichtelement verbesserte, präzise Messungen von fluiden Medien unter Minimierung von Kondensation und Vereisung ermöglicht. Die Sensorvorrichtung kann aufgrund ihrer Konstruktion mehrere Nachteile aufweisen. Der erhöhte Energieverbrauch durch die Notwendigkeit, das Dichtelement zu beheizen, kann in energiekritischen Anwendungen problematisch sein. Zudem erhöht die Integration von Heizelementen die Systemkomplexität. Ohne ein Deckelelement ist die Membran Umgebungseinflüssen wie Staub und Feuchtigkeit außerhalb der Kavität ausgesetzt, was ihre Funktionalität und Langlebigkeit beeinträchtigen können. Zudem besteht ein Risiko für die Membran bei Druckstößen, wenn diese den Raum teilt und undurchlässig für das Medium ist, was zu einer Beschädigung oder zum Reißen der Membran führen könnte. Diese Faktoren können die Zuverlässigkeit und Betriebseffizienz der Sensorvorrichtung beeinträchtigen.

Aus der DE 10 2018 119 212 A1 ist eine Sensorvorrichtung mit zwei Pellistorelementen bekannt. Die Sensorvorrichtung weist ein gemeinsames Heizelement und zwei getrennte Temperatursensorelemente auf, die auf den zwei Pellistorelementen angeordnet sind und die mit einer elektronischen Anordnung verschaltet sind. Nachteilig an dieser Sensorvorrichtung könnte sein, dass Gasgemische nicht differenziert gemessen werden können. Hierzu wird vorgeschlagen, eine Katalysatorelement vorzusehen, das ein Teil der Pellistorelemente sein soll. Die Sensorvorrichtung mit den zwei Pellistorelementen benötigt insgesamt vier Membranen und für jede Membran ein Heizelement und ein Temperaturmesselement und wird dadurch im Aufbau relativ komplex und aufwendig. Zudem vergrößern sich dadurch die geometrischen Abmessungen der Sensorvorrichtung. Die vorhandenen mehreren Membranen in können sich bei Drifts, Verschmutzungen, Kondensat oder sonstigen Erscheinungen nicht linear verhalten. Die Sensorvorrichtung kann anfällig sein für Fremdeinflüsse wie Durchfluss, Druck, Drift, Vergiftung der Sensoroberflächen und andere Störfaktoren. Eine Verifizierung und Kalibrierung von solchen vielteiligen Komponenten-Systemen sind besonders aufwendig.

Die WO 2022/106239 A1 offenbart einen Sensor zur Erfassung mindestens einer Eigenschaft eines fluiden Mediums in einem Messraum. Ein Sensorelement des Sensors weist eine beheizbare Membran und eine Messbrücke auf. Basierend auf einem elektrischen Widerstand der Messbrücke kann mit dem Sensor ein Druck des fluiden Mediums erfasst werden. Eine Druckmessung kann dadurch ermöglicht werden, dass eine mikromechanische Membran Gasmedium in zwei Teile teilt und die Druckdifferenz die Membran mechanisch verformt. Bei hohen Druckdifferenzen ist dadurch eine Zerstörung des Sensors möglich. Druckänderungen des fluiden Mediums beeinflussen das Messergebnis. Die WO 2022/268896 offenbart einen Sensor zur Erfassung einer Konzentration oder Zusammensetzung eines fluiden Mediums.

## Aufgabe der Erfindung

Eine Aufgabe der Erfindung besteht darin, einen Nachteil oder mehrere Nachteile des Stands der Technik zumindest teilweise zu überwinden. Insbesondere sollen ein Sensorelement und ein Sensor sowie ein Verfahren gefunden werden, mit dem die Wärmeleitfähigkeit eines fluiden Mediums, insbesondere eines Gasgemischs, möglichst genau gemessen werden kann. Insbesondere wird eine Vorrichtung in Form eines Sensorelements und eines Sensors beschrieben sowie ein Verfahren zur möglichst genauen Messung der Wärmeleitfähigkeit eines fluiden Mediums, insbesondere eines Gasgemischs, vor allem bei hohem Feuchtegehalt oder Kondensat. Besonders bevorzugt soll die Wasserstoffkonzentration, die Kohlenwasserstoffgas-Konzentration oder die Heliumkonzentration in einem Gasgemisch unabhängig von dem Gehalt an gasförmigem Wasser möglichst genau messbar sein. Gleichzeitig soll der Aufbau des Sensorelements und des Sensors möglichst einfach sein und kostengünstig zu fertigen sein. Eine geringe Störanfälligkeit und eine hohe chemische Beständigkeit wären ebenfalls vorteilhaft. Es soll ein möglichst wartungsfreier oder wartungsarmer Aufbau bereitgestellt werden.

## Offenbarung der Erfindung

Einen Beitrag zur zumindest teilweisen Erfüllung zumindest einer der vorgenannten Aufgaben leisten die Merkmale der unabhängigen Ansprüche 1 und 22. Die abhängigen Ansprüche 2 bis 21 und 23 bis 34 stellen bevorzugte Ausführungsformen bereit, die zur zumindest teilweisen Erfüllung zumindest einer der Aufgaben beitragen. Zur zumindest teilweisen Lösung der Aufgaben leistet folglich ein Sensorelement nach Anspruch 1, einen Sensor nach Anspruch 19 und ein Verfahren nach Anspruch 22 zumindest einen Beitrag. Bevorzugte Varianten werden mit den Unteransprüchen 2 bis 18, 20, 21, 23 bis 34 beansprucht.

Die Aufgaben der Erfindung werden also zumindest teilweise oder beitragsweise gelöst durch ein Sensorelement zur Messung von thermischen Eigenschaften eines fluiden Mediums, insbesondere zur Messung der Wärmeleitfähigkeit und/oder zur Bestimmung des Wasserstoffgasgehalts, des Kohlenwasserstoff-Gasgehalts oder des Heliumgehalts des fluiden Mediums, das Sensorelement aufweisend eine Membran, eine Abdeckung und einen Rahmen, wobei der Rahmen die Membran auf zumindest zwei Seiten umgibt, wobei die Membran von dem Rahmen durch Ausnehmungen bereichsweise getrennt ist, wobei die Membran freitragend ist und über Stege mit dem Rahmen verbunden ist, wobei der Rahmen die Membran über die Stege trägt, das Sensorelement ferner aufweisend zumindest ein elektrisches Widerstandselement in Form zumindest einer Leiterbahn auf dem Rahmen und ein elektrisches Heizelement auf der Membran in Form einer Leiterbahn auf der Membran, wobei das elektrische Heizelement über Anschlussleiterbahnen elektrisch kontaktiert ist, wobei die Anschlussleiterbahnen vom Rahmen über zumindest einen der Stege bis auf die Membran verlaufen, wobei der Rahmen ein elektrisches Heizelement in Form einer äußeren Leiterbahn auf dem Rahmen aufweist, wobei das elektrische Heizelement des Rahmens das zumindest eine elektrische Widerstandelement auf dem Rahmen an zumindest zwei Seiten oder an zumindest drei Seiten außen umrahmt.

Bevorzugt ist das Sensorelement zur Erfassung des Anteils eines Kohlenwasserstoff-Gases, eines Alkan-Gases oder eines He-Anteils oder eines $H_2$-Anteils in einem Messgas ausgebildet, besonders bevorzugt zur Erfassung eines $H_2$-Anteils in einem Messgas ausgebildet. Das Messgas ist vorzugsweise ein Gasgemisch.

Bevorzugt kann vorgesehen sein, dass die Ausnehmungen in der Membran angeordnet oder erzeugt sind beziehungsweise werden, besonders bevorzugt am Übergang der Membran zum Rahmen angeordnet oder erzeugt sind beziehungsweise werden.

Die Anschlussleiterbahnen sind Leiterbahnen, die das elektrische Heizelement elektrisch kontaktieren. Die Anschlussleiterbahnen können durch eine Metallisierung realisiert werden.

Bevorzugt ist das fluide Medium ein Gas, besonders bevorzugt ein Gasgemisch.

Das Sensorelement kann vorzugsweise ein Silizium-basierter mikromechanischer Sensor sein.

Das Sensorelement kann vorzugsweise als MEMS aufgebaut sein.

Es kann vorgesehen sein, dass die Membran und das elektrische Heizelement auf der Membran keine katalytischen oder elektrochemischen Beschichtungen aufweisen. Hierdurch wird die Stabilität und Langlebigkeit (Beständigkeit) des Sensorelements verbessert und eine Verfälschung des Messergebnisses durch Reaktionen auf der katalytischen und/oder elektrochemischen Schicht vermieden, die zum Beispiel von Vergiftungseffekten der katalytischen oder elektrochemischen Beschichtungen verursacht werden können. Ferner kann eine Messung ohne zusätzliche fluide Komponenten, zum Beispiel Sauerstoff, durchgeführt werden.

Ferner kann vorgesehen sein, dass die beiden Seiten der Membran über die Ausnehmungen miteinander fluiddurchlässig oder gasdurchlässig verbunden sind. Hierdurch wird vermieden, dass sich eine Druckdifferenz zwischen einer Oberseite und einer Unterseite der Membran aufbauen kann, die die Membran und die Stege mechanisch belastet. Dadurch können die Membran und die Stege besonders filigran aufgebaut werden, wodurch höhere Temperaturen der Membran und größere Temperaturdifferenzen zwischen der Membran und dem Rahmen ermöglicht werden, wodurch wiederum die Sensitivität des Sensorelements verbessert wird. Zusätzlich kann eine Messung bei sehr hohen Drucken durchgeführt werden, da die Membran durch die Druckdifferenz zwischen der Oberseite und der Unterseite nicht zerstört oder beschädigt wird.

Das zumindest eine elektrische Widerstandselement auf dem Rahmen und das elektrische Heizelement auf der Membran bilden keine gemeinsame Leiterbahn. Insbesondere sind das zumindest eine elektrische Widerstandselement auf dem Rahmen und das elektrische Heizelement auf der Membran nicht unmittelbar elektrisch leitend miteinander verbunden. Bevorzugt bilden das zumindest eine elektrische Widerstandselement auf dem Rahmen und das elektrische Heizelement auf der Membran voneinander getrennte Leiterbahnen, die separat voneinander mit einer elektrischen Spannung beaufschlagbar sind.

Die thermischen Eigenschaften des fluiden Mediums beziehungsweise Gases sind insbesondere die Wärmeleitfähigkeit des fluiden Mediums beziehungsweise Gases.

Da sich der Wasserstoffgasgehalt und der Heliumgehalt eines fluiden Mediums oder Gasgemischs aus der Wärmeleitfähigkeit des fluiden Mediums beziehungsweise des Gasgemischs berechnen lässt, wird vorliegend die Bestimmung des Wasserstoffgehalts, des Kohlenwasserstoff-Gasgehalts und des Heliumgehalts als Verfahren zur Bestimmung einer thermischen Eigenschaft des fluiden Mediums beziehungsweise Gases verstanden, zumal die thermischen Eigenschaften eines fluiden Mediums oder Gases von dessen Zusammensetzung abhängen.

Zusammengefasst betrifft die vorliegende Erfindung ein Sensorelement zur Messung von thermischen Eigenschaften eines fluiden Mediums aufweisend eine Membran und einen Rahmen der die Membran auf zumindest zwei Seiten umgibt, wobei die Membran von dem Rahmen durch Ausnehmungen bereichsweise getrennt ist, die Membran freitragend ist und über Stege von dem Rahmen getragen wird, das Sensorelement ferner aufweisend zumindest ein elektrisches Widerstandselement auf dem Rahmen und ein elektrisches Heizelement auf der Membran, wobei das elektrische Heizelement über Anschlussleiterbahnen elektrisch kontaktiert ist, die vom Rahmen über zumindest einen der Stege bis auf die Membran verlaufen.

Es kann vorgesehen sein, dass die Membran mit dem elektrischen Heizelement heizbar ist und die Temperatur der Membran über den elektrischen Widerstand des elektrischen Heizelements einstellbar ist, wobei bevorzugt das Sensorelement eine einstellbare Heizeinrichtung zum Heizen des elektrischen Heizelements und eine Membran-Temperatureinstelleinrichtung zum Einstellen der Temperatur der Membran aufweist, wobei die Membran-Temperatureinstelleinrichtung zur Bestimmung des elektrischen Widerstands des elektrischen Heizelements eingerichtet ist.

Dadurch kann die Membran mit dem gleichen elektrischen Heizelement geheizt werden, mit dem auch die Temperatur der Membran eingestellt werden kann. Hierdurch gibt es keinen zeitlichen Versatz zwischen Einstellung und Heizung. Zusätzlich ist ein besonders kompakter Aufbau möglich. Durch den besonders kompakten Aufbau kann die Temperatur der Membran mit weniger Leistung betrieben werden.

Durch die Ausnehmungen werden die thermischen Spannungen und der Wärmeabfluss von der Membran auf den Rahmen als Festkörper reduziert. Dadurch kann die Temperatur der Membran höher eingestellt werden, und gleichzeitig kann so die Messempfindlichkeit und die Messgenauigkeit erhöht werden. Der Wärmeabfluss von der Membran wird so auf den Wärmeabfluss durch das fluide Medium verlagert.

Es ist grundsätzlich vorstellbar, dass ein gewisser Anteil eines Stroms zum gemeinsamen Heizen des Rahmens und des elektrischen Heizelements verwendet wird, wobei dann zumindest das elektrische Heizelement auf der Membran zusätzlich mit einem separaten Strom unabhängig geheizt werden können muss.

Des Weiteren kann vorgesehen sein, dass die Temperatur des Rahmens mit dem zumindest einen elektrischen Widerstandselement messbar ist, wobei bevorzugt das Sensorelement eine Rahmen-Temperaturmesseinrichtung zur Messung der Temperatur des Rahmens aufweist, wobei besonders bevorzugt die Rahmen-Temperaturmesseinrichtung zur Bestimmung des elektrischen Widerstands des zumindest einen elektrischen Widerstandselements eingerichtet ist.

Die gemessene Temperatur des Rahmens wird für Thermostatisierung des Rahmens genutzt, in dem eine Abweichung zwischen Soll- und Ist-Wert gemessen und durch Erhöhung bzw. Reduzierung der Heizleistung auf die Soll-Temperatur gebracht.

Ferner kann vorgesehen sein, dass die Membran und der Rahmen unabhängig voneinander heizbar sind.

Hierdurch kann die Temperatur des Rahmens als Wärmesenke und die Temperatur der Membran als Wärmequelle unabhängig voneinander eingestellt werden und so das Sensorelement in einem besonders gut geeigneten Temperaturbereich betrieben werden. Dies hängt damit zusammen, dass die Wärmeleitfähigkeit $\lambda$ (T) eine temperaturabhängige Komponente mit unterschiedlichen Steigungen für verschiedene Gase ist. Wenn der Einfluss der Temperatur nicht nur kompensiert, sondern aktiv gesteuert wird, erhält man erstens ein reproduzierbares Messverhalten und zweitens kann der Unterschied in der Wärmeleitfähigkeit zwischen verschiedenen Gasen in dem fluiden Medium durch flexible Wahl der Betriebstemperatur variiert werden, wodurch die Empfindlichkeit zwischen den zu detektierenden Gasen erhöht oder verringert wird. Insbesondere kann des Sensorelement auf diese Weise in einem Temperaturbereich um die 200 °C betrieben werden, was die Messung der thermischen Leitfähigkeit (der Wärmeleitfähigkeit) eines Gases im Hintergrundgas mit beliebigen Verhältnissen der Komponenten des Hintergrundgases wie von Luft-, und/oder Sticksoff- und/oder Sauerstoff- und/oder Wasserdampf-Gemisch durchzuführen ermöglicht und dadurch eine Verfälschung der Messergebnisse durch die Änderungen der Konzentrationen einzelner Komponenten im Hintergrundgas verhindert. Ein weiterer Vorteil des beheizbaren Rahmens ist die Verhinderung von Kondensation auf dem Sensor, insbesondere wenn der Rahmen auf eine Übertemperatur zu Umgebungstemperatur geheizt wird. Es kann also erfindungsgemäß vorgesehen sein, dass der Rahmen im Betrieb des Sensorelements eine Temperatur hat, die höher ist als die Taupunkttemperatur des vorhandenen oder möglichen Kondensats.

Gemäß einer bevorzugten Weiterbildung kann vorgesehen sein, dass die Stege und die Membran aus dem gleichen Material bestehen und einteilig ausgeführt sind, wobei bevorzugt die Membran und die Stege aus Siliziumnitrid oder Siliziumoxid bestehen.

Dass die Membran und die Stege aus Siliziumnitrid oder Siliziumoxid bestehen, schließt nicht aus, dass die Membran und die Stege beschichtet sein können, bevorzugt metallisch für eine Leiterbahn beschichtet sein können und/oder mit einer Schutzschicht aus Siliziumoxid, Siliziumnitrid oder Aluminiumoxid oder ähnlichen Keramiken beschichtet sein können. Insbesondere verlaufen in jedem Fall die Anschlussleiterbahnen über die Stege und die Leiterbahnen des elektrischen Heizelements auf der Membran.

Dadurch, dass die Stege und die Membran aus dem gleichen Material bestehen und einteilig ausgeführt sind, wird der Aufbau des Sensorelements vereinfacht. Die Ausnehmungen und damit die Form der Stege kann dann einfach durch Freiätzen erzeugt werden.

Es kann auch vorgesehen sein, dass der Rahmen aus Silizium oder aus einer Keramik besteht, insbesondere aus Silizium oder aus einer Aluminiumoxid-Keramik besteht.

Hierdurch kann das Sensorelement auf einem Siliziumwafer, auf einem Keramikblock oder auf einem Aluminiumoxidblock aufgebaut werden. Besonders bevorzugt besteht der Rahmen aus Silizium.

Des Weiteren kann vorgesehen sein, dass das zumindest eine elektrische Widerstandselement durch zumindest eine metallische Leiterbahn auf dem Rahmen realisiert ist, wobei bevorzugt die zumindest eine metallische Leiterbahn aus einem Metall oder einer Metalllegierung mit einem Temperaturkoeffizient des elektrischen Widerstands von zumindest 3 10$^{-3}$ 1/K oder aus Nickel besteht, und/oder das elektrische Heizelement durch eine metallische Leiterbahn auf der Membran realisiert ist, wobei bevorzugt die metallische Leiterbahn aus einem Metall oder einer Metalllegierung mit einem Temperaturkoeffizient von zumindest 3 10$^{-3}$ 1/K oder aus Nickel besteht.

Derartige Leiterbahnen sind gut zur Bestimmung des elektrischen Widerstands beziehungsweise der aufgenommenen Leistung geeignet. Zudem ist bei Leiterbahnen aus diesen Materialien, insbesondere aus Nickel, die Temperaturabhängigkeit des Widerstands besonders hoch und damit die Temperatur über den Widerstand besonders genau messbar.

Die Leiterbahnen des elektrischen Heizelements und des zumindest einen elektrischen Widerstandselements können mit einer Dünnschichttechnik auf der Membran beziehungsweise auf dem Rahmen hergestellt werden.

Auch kann vorgesehen sein, dass die Membran nicht in einem Randbereich des Sensorelements angeordnet ist und allseitig von dem Rahmen umgeben ist, bevorzugt die Membran in einem mittleren Bereich des Sensorelements angeordnet ist.

Hierdurch wird die Membran außen von dem Rahmen vor mechanischen Beschädigungen geschützt.

Es ist vorgesehen, dass das Sensorelement eine Abdeckung aufweist, wobei bevorzugt die Abdeckung ein mit der Umgebung gasdurchlässiges verbundenes Gas-Volumen um die Membran herum begrenzt.

Mit er Abdeckung wird sichergestellt, dass die Membran von den störenden Einflüssen eines Gasstroms oder Fluidstroms unbeeinträchtigt bleibt. Eine sehr wichtige Eigenschaft und ein besonderer erfindungsgemäßer Vorteil der Abdeckung ist die Bildung eines geschlossenen, kleinen Volumens, das in Kombination mit der Heizstruktur am Rahmen des Sensors einen Dampfdruck im Volumen erzeugt und das Eindringen von Kondensat zur Messmembran verhindert und damit auch die Zerstörung der Membran verhindert. Außerdem verläuft die Rahmenstruktur bevorzugt quer im Gaskanal und führt zu einem Temperatur-Hotspot auf dem Weg zur Messmembran, da in diesem Bereich die Abdeckung nicht direkt auf der Heizstruktur aufliegt und wenig Wärme abgibt.

Die Abdeckung definiert inneres Volumen und die Abstände oberhalb der Membran zu Wärmesenke. Dadurch wird die Reproduzierbarkeit und die Reaktionszeit der Wärmeleitfähigkeitsmessung erhöht.

Die Abdeckung hat zusätzlich die Funktion, einen einseitig zugänglichen Fluidkanal beziehungsweise Gaskanal zu begrenzen, der eine Öffnung aufweist, wobei durch den Fluidkanal oder Gaskanal das fluide Medium oder das Gas zur Membran gelangt, insbesondere durch Diffusion zur Membran gelangt. Bevorzugt ist die Öffnung des Fluidkanals beziehungsweise des Gaskanals durch einen Filter abgedeckt, insbesondere durch einen Sintermetallfilter abgedeckt. Bevorzugt kann auch vorgesehen sein, dass der Fluidkanal beziehungsweise Gaskanal auf einer Seite des Sensorelements offen beziehungsweise zugänglich ist, der Kontaktfeldern zum elektrischen Kontaktieren des Sensorelements gegenüberliegend angeordnet ist.

Die Abdeckung kann bevorzugt aus Silizium oder aus einer Keramik bestehen, insbesondere aus einer Aluminiumoxid-Keramik bestehen. Besonders bevorzugt besteht die Abdeckung aus Silizium.

Die Abdeckung ermöglicht eine besonders gut reproduzierbare Messung der Wärmeleitfähigkeit des fluiden Mediums mit dem Sensorelement. Die Abdeckung reduziert auch die Leistungsaufnahme des Sensors. Zusätzliche werden die Oberflächen des Sensorelements vor Staub und Kondensat geschützt. Zudem wird das Sensorelement mit der Abdeckung gegenüber Vergiftungserscheinungen unanfällig oder weniger anfällig.

Die Abdeckung schließt bündig mit dem Rahmen ab, so dass sie zusammen eine bündige Fläche bilden. Dieser Aufbau ermöglicht es, beim Einbau des Sensors oder Sensorelements in ein Gehäuse, den Gas-Kanal bündig zu schließen und damit das Totvolumen auf praktisch Null zu reduzieren. An der bündigen Fläche kann ein ebener Filter flächenbündig angelegt beziehungsweise angebaut werden. Das Totvolumen ist der Raum zwischen dem Sensor beziehungsweise Sensorelement und der notwendige Abstand zu den umliegenden Komponenten, wie zum Beispiel einem Sintermetallfilter, zu dem dann kein Abstand nötig ist. Das Totvolumen begrenzt sich nur auf das innere Volumen zwischen dem Rahmen und der Auflagefläche. Die bündige Anbindung ermöglicht es, einen Filter oder einen Sintermetallfilter zum Schutz vor Durchfluss, Explosion und Staub ohne Zwischenräume einzusetzen.

Des Weiteren kann vorgesehen sein, dass das Sensorelement zwei elektrische Widerstandselemente in Form von zwei Leiterbahnen als das zumindest eine elektrische Widerstandselement auf dem Rahmen aufweist, wobei bevorzugt die zwei elektrischen Widerstandselemente die Membran auf zwei einander gegenüberliegenden Seiten umgeben, so dass die Membran zwischen den zwei elektrischen Widerstandselementen angeordnet ist. Die zwei elektrischen Widerstandselemente sind symmetrisch zur Membran angeordnet. Dieser Aufbau ermöglicht an zwei Stellen des Sensors eine repräsentative Temperaturbestimmung. Dadurch, dass es unterschiedliche Temperaturquellen auf dem Sensor gibt, existiert ein Temperaturgradient über das Sensorelement. Durch die symmetrische Anordnung der elektrischen Widerstandselemente gibt es zwei identische, repräsentative Temperaturmessstellen.

Zusätzlich können die zwei elektrischen Widerstandselemente für unterschiedliche Anwendungen verwendet werden. Während das eine die Informationen für die Bereitstellung der benötigten elektrischen Leistung für die Temperatureinstellung genutzt wird, wird die Information des anderen in einer analogen Schaltung für die Kompensation der Temperatureinflusses auf die Genauigkeit der Messung verwendet. Die Kombination ermöglicht ein sehr stabiles Signal.

Gemäß einer bevorzugten Weiterbildung kann vorgesehen sein, dass das Sensorelement einen freitragenden Draht als Referenzwiderstand aufweist, wobei der freitragende Draht an zwei Enden mit dem Rahmen verbunden und am Rahmen aufgehängt ist und durch Ausnehmungen bereichsweise räumlich von dem Rahmen getrennt ist, wobei bevorzugt der freitragende Draht von der Abdeckung umgeben ist, die mit dem Rahmen fest verbunden ist, wobei die Abdeckung zumindest bereichsweise räumlich von dem freitragenden Draht beabstandet ist, wobei besonders bevorzugt die Abdeckung zumindest bereichsweise als gasdurchlässiger Filter aufgebaut ist.

Hierdurch kann der freitragende Draht als Referenz verwendet werden. Dadurch lassen sich Einflüsse wie Druckänderungen und/oder Temperaturänderungen und/oder Durchflussänderungen sehr gut kompensieren. Der freitragende Draht ist vorzugsweise in einem von dem Fluid-Volumen der Membran getrennten Fluid-Volumen angeordnet. Wenn der freitragende Draht einen eigenen Gaskanal oder ein eigenes Fluid-Volumen hat, kann die Wärme nicht durch Konvektion des Gases oder fluiden Mediums von der Membran als Wärmequelle zum freitragenden Draht als Referenz gelangen.

Ein solcher Sensor und ein solches Sensorelement mit freitragendem Draht ermöglichen unter anderem die Kompensation von Druckeinflüssen auf das Messsignal. Der erfindungsgemäße Sensor ist für Drücke ab 300 mbar bis hin zu 1000 bar und theoretisch auch darüber hinaus einsetzbar. Die Druckabhängigkeit der Wärmeleitfähigkeitsmessung ist auf die mittlere freie Weglänge der Gasmoleküle und die Geometrie des Sensors zurückzuführen. Für die Messung der Wärmeleitfähigkeit oder des Gehalts an den gesuchten Molekülen in dem fluiden Medium kann als Referenzmessung der freitragende Draht mit verhältnismäßig sehr geringer Oberfläche verwendet werden. Ein Vergleich der Referenzmessung mit dem freitragenden Draht und einer Messung mit einer Messmembran, das über eine relativ große Membranfläche verfügt, zeigt unterschiedliche Ergebnisse in der Wärmeübertragung. Diese Unterschiede sind hauptsächlich auf die verschiedenen geometrischen Ausgestaltungen der beiden Sensorelemente zurückzuführen, wobei die zugrundeliegende Messmethode die gleiche bleibt. Derartige Messungen sind besonders relevant und besonders gut geeignet, um Einflüsse durch einen sich ändernden Druck und eine sich ändernde Temperatur des fluiden Mediums zu kompensieren. Bevorzugt wird bei der Messung die Temperatur konstant gehalten, so dass die Referenz durch den freiliegenden Draht für Kompensation von Druckänderungen verwendet werden kann.

Es kann auch vorgesehen sein, dass die Abdeckung, die den freitragenden Draht umgibt, den freitragenden Draht von einem Fluid-Volumen des Sensorelements trennt, das die Membran umgibt.

Es kann auch vorgesehen sein, dass die Membran auf zumindest zwei Seiten zum Rahmen und oberhalb und unterhalb der Membran von der Abdeckung umgeben ist, wobei bevorzugt die Abdeckung zumindest bereichsweise als gasdurchlässiger Filter aufgebaut ist und/oder zumindest bereichsweise aus Silizium besteht.

Hiermit wird sichergestellt, dass die Membran von den störenden Einflüssen eines Gasstroms oder Fluidstroms unbeeinträchtigt bleibt. Zusätzlich definiert die Geometrie der Abdeckung einen festen Abstand zwischen der Wärmequelle auf der Membran und der Wärmesenke, die durch die Abdeckung und den Rahmen gebildet wird. Dies ermöglicht eine Verbesserung der Reproduzierbarkeit des Messergebnisses.

Es ist vorgesehen, dass der Rahmen ein elektrisches Heizelement in Form einer äußeren Leiterbahn auf dem Rahmen aufweist, wobei das elektrische Heizelement des Rahmens das zumindest eine elektrische Widerstandselement auf dem Rahmen an zumindest zwei Seiten oder an zumindest drei Seiten außen umrahmt, wobei bevorzugt die äußere Leiterbahn auf dem Rahmen breiter ist als die Leiterbahnen des zumindest einen elektrischen Widerstandselements auf dem Rahmen und des elektrischen Heizelements auf der Membran.

Hierdurch kann mit dem elektrischen Heizelement auf dem Rahmen dieser unabhängig und auf einfache Weise geheizt beziehungsweise temperiert werden, während das zumindest eine elektrische Widerstandselement auf dem Rahmen zur Bestimmung der Temperatur des Rahmens verwendet wird. Dadurch lässt sich die Temperatur der Membran durch eine Heizleistung in dem elektrischen Heizelement auf der Membran einstellen und die Temperatur des Rahmens durch eine Heizleistung in dem elektrischen Heizelement auf dem Rahmen einstellen.

Dabei kann vorgesehen sein, dass ein freiliegender Teil der äußeren Leiterbahn des elektrischen Heizelements des Rahmens in einem Fluidkanal verläuft, der zu einem die Membran umgebenden Fluid-Volumen führt, wobei bevorzugt der freiliegende Teil der äußeren Leiterbahn quer zu dem Fluidkanal verläuft und/oder der Fluidkanal in der Abdeckung ausgeformt ist, die die Membran umschließt, wobei die Abdeckung die anderen Bereiche der äußeren Leiterbahn abdecken.

Hierdurch werden Durchflusseinflüsse bei der Messung eliminiert. Zudem kann das zur Membran gelangende fluide Medium vorgeheizt werden.

Es kann vorgesehen sein, dass das zumindest eine elektrische Widerstandselement auf dem Rahmen und das elektrische Heizelement auf der Membran, und sofern vorhanden auch das elektrische Heizelement des Rahmens, über Kontaktfelder auf dem Rahmen elektrisch kontaktiert sind, wobei bevorzugt die Kontaktfelder durch verbreiterte Bereiche der Leiterbahnen ausgeführt sind und/oder die Kontaktfelder alle auf einer Seite des Rahmens angeordnet sind.

Hierdurch kann das Sensorelement auf einfache Weise elektrisch kontaktiert und verbaut werden. Gleichzeitig ist so ein kompakter Aufbau möglich, der eine kürzere Reaktionszeit des Sensorelements bewirkt.

Bevorzugt kann auch vorgesehen sein, dass die Membran eine Fläche von maximal 20 mm$^2$ hat, bevorzugt eine Fläche von maximal 1 mm$^2$ hat, besonders bevorzugt eine Fläche von maximal 0,5 mm$^2$ hat, ganz besonders bevorzugt eine Fläche von maximal 0,1 mm$^2$ hat.

Hiermit wird ein kompakter Aufbau ermöglicht, der eine kürzere Reaktionszeit des Sensorelements erzielt. Zudem kann so die elektrische Anschlussleistung des Sensorelements geringgehalten werden.

Ferner kann vorgesehen sein, dass der Rahmen mit der Membran in der Ebene der Membran einen äußeren Durchmesser von maximal 10 mm hat, bevorzugt einen äußeren Durchmesser von maximal 3 mm hat, besonders bevorzugt einen äußeren Durchmesser von maximal 2 mm hat.

Hiermit wird ein kompakter Aufbau ermöglicht, der eine erhöhte Reaktionszeit des Sensorelements erzielt. Zudem kann so die elektrische Anschlussleistung des Sensorelements geringgehalten werden.

Es kann vorgesehen sein, dass die Abdeckung beheizbar ist.

Dabei kann vorgesehen sein, dass die Abdeckung mit dem elektrischen Heizelement auf dem Rahmen beheizbar ist.

Es kann auch vorgesehen sein, dass die Abdeckung zumindest eine Gaseintrittsöffnung des Sensorelements definiert, wobei bevorzugt die Leiterbahn des elektrischen Heizelements auf dem Rahmen in der zumindest einen Gaseintrittsöffnung freiliegt.

Durch all diese Maßnahmen kann die Bildung eines Kondensats in dem von der Abdeckung enthaltenen Messvolumen und dadurch eine Verfälschung des Messergebnisses oder eine Zerstörung des Sensorelements verhindert werden. Optional kann also die Abdeckung auch die Funktion einer Heizung haben, wie auch die Struktur am Rahmen des Sensors.

Die der vorliegenden Erfindung zugrundeliegenden Aufgaben werden zumindest teilweise auch gelöst durch einen Sensor zur Bestimmung von thermischen Eigenschaften eines fluiden Mediums, insbesondere zur Bestimmung der thermischen Leitfähigkeit und/oder des Wasserstoffgas-Gehalts, des Kohlenwasserstoffgas-Gehalts oder des Heliumgehalts eines fluiden Mediums, der Sensor aufweisend ein erfindungsgemäßes oder zuvor beschriebenes Sensorelement, wobei die Membran mit dem elektrischen Heizelement auf der Membran unabhängig von der Temperatur des Rahmens oder die Membran mit dem elektrischen Heizelement auf der Membran und der Rahmen unabhängig voneinander beheizbar sind, wobei die Temperatur der Membran mit dem elektrischen Heizelement auf der Membran und die Temperatur des Rahmens mit dem zumindest einen elektrischen Widerstandelement messbar sind, wobei die Temperatur der Membran mit dem elektrischen Heizelement auf der Membran und die Temperatur des Rahmens aufgrund der Messung der Temperaturen regelbar sind, wobei die hierfür notwendigen Heizleistungen mit dem Sensor bestimmbar sind, um auf die thermischen Eigenschaften des fluiden Mediums zu schließen, bevorzugt um die Wärmeleitfähigkeit und/oder den Wasserstoffgas-Gehalt, den Kohlenwasserstoffgas-Gehalt oder den Heliumgehalt des fluiden Mediums zu bestimmen.

Der Sensor kann so unmittelbar zur Messung eingesetzt werden und weist die Vorteile des Sensorelements auf.

Dabei kann vorgesehen sein, dass der Sensor eine Wheatstone'sche Brückenschaltung aufweist, die derart mit dem elektrischen Heizelement auf der Membran verbunden ist, dass die Heizleistung der Membran über die Wheatstone'sche Brückenschaltung regelbar ist.

Hierdurch kann die Messung mit hoher Reaktionsgeschwindigkeit erfolgen und stabil durchgeführt werden.

Bevorzugt ist die Wheatstone'sche Brückenschaltung eine selbstregelnde Wheatstone'sche Brückenschaltung.

Ferner kann dabei kann vorgesehen sein, dass die Membran im Betrieb des Sensors auf Temperaturen von mindestens 200 °C heizbar ist und/oder der Rahmen im Betrieb des Sensors auf mindestens 130 °C heizbar ist, wobei bevorzugt die Membran im Betrieb des Sensors auf Temperaturen von mindestens 220 °C heizbar ist und/oder der Rahmen im Betrieb des Sensors auf mindestens 150 °C heizbar ist, wobei besonders bevorzugt der Rahmen im Betrieb des Sensors auf mindestens 180 °C heizbar ist.

Hierdurch wird erreicht, dass die Messung in einem Temperaturbereich erfolgt, der im quasibinären Bereich liegt und dadurch der Wasserstoffgas-Gehalt, der Kohlenwasserstoffgas-Gehalt oder der Heliumgehalt unabhängig von dem Wasserdampf oder Wassergas-Gehalt in dem fluiden Medium beziehungsweise in dem Gasgemisch bestimmt werden kann. Hierdurch wird insbesondere die Bestimmung des Wasserstoffgas-Gehalts in einem Gas wie Luft, Sauerstoff oder Stickstoff bei unterschiedlichen Wasserdampf-Gehalten in dem Gas wesentlich genauer.

Mit dem gleichen Verfahren wie für Wasserdampf in Sauerstoff oder Luft, aber bei anderen Temperaturen, können die Schnittpunkte der Wärmeleitfähigkeiten auch für andere Gaspaare, wie Kohlendioxid und Argon oder Stickstoff und Ammoniak, ermittelt werden.

Die der vorliegenden Erfindung zugrundeliegenden Aufgaben werden zumindest teilweise auch gelöst durch ein Verfahren zur Bestimmung mindestens einer thermischen Eigenschaft eines fluiden Mediums, insbesondere der thermischen Wärmeleitfähigkeit und/oder des Wasserstoff-Gehalts, des Kohlenwasserstoffgas-Gehalts oder des Heliumgehalts des fluiden Mediums, das Verfahren aufweisend die Schritte:

A) Heizen einer Membran mit einem elektrischen Heizelement in Form einer auf der Membran angeordnete Leiterbahn, wobei die Membran über Stege mit einem Rahmen verbunden ist und von dem Rahmen gehalten wird und wobei die Membran innerhalb einer Abdeckung von einem definierten Volumen des fluiden Mediums umgeben ist;
B) Übertragen von Wärme von der Membran und dem elektrischen Heizelement auf das die Membran umgebende fluide Medium;
C) Übertragen von Wärme von dem fluiden Medium auf den Rahmen, wobei der Rahmen eine niedrigere Temperatur hat als die Membran;
D) Bestimmen der Temperatur der Membran und des Rahmens;

E) Steuern oder Regeln der Temperatur der Membran durch eine Regelung der elektrischen Leistung zum Heizen der Membran;

F) Bestimmen der thermischen Eigenschaft des fluiden Mediums, insbesondere der thermischen Wärmeleitfähigkeit und/oder des Wasserstoff-Gehalts, des Kohlenwasserstoffgas-Gehalts oder des Heliumgehalts des fluiden Mediums, durch die zum Regeln der Temperatur der Membran notwendige elektrische Leistung und durch die bekannte Temperaturdifferenz zwischen der Membran und dem Rahmen; und

G) Steuern oder Regeln der Temperatur des Rahmens.

In Schritt G) ist vorgesehen:
G) Steuern oder Regeln der Temperatur des Rahmens. Bevorzugt kann vorgesehen sein,I dass in Schritt G) das Steuern oder Regeln der Temperatur des Rahmens durch eine Regelung der elektrischen Leistung zum Heizen des Rahmens erfolgt.

Dadurch wird der Rahmen auf einer definierten Temperatur gehalten, wodurch die Messung reproduzierbarer und stabiler wird.

Ferner kann vorgesehen sein, dass die Temperatur der Membran oberhalb von 200 °C gehalten wird und die Temperatur des Rahmens unterhalb von 200 °C gehalten wird.

Hierdurch wird erreicht, dass die Messung in einem Temperaturbereich erfolgt, der im quasibinären Bereich liegt und dadurch kann der Messgas-Gehalt, insbesondere der Wasserstoffgas-Gehalt oder der Kohlenwasserstoffgas-Gehalt oder der Heliumgehalt, unabhängig von dem Wasserdampf oder Wassergas-Gehalt in dem fluiden Medium beziehungsweise in den Gasen wie Luft, Sauerstoff oder Stickstoff bestimmt werden. Hierdurch wird insbesondere die Bestimmung des Messgas-Gehalts, insbesondere Wasserstoffgas-Gehalts, in einem Gas bei unterschiedlichen Wassergas-Gehalten in dem Gas wie Luft, Sauerstoff oder Stickstoff wesentlich genauer.

Es kann auch vorgesehen sein, dass die Membran und der Rahmen Teil eines Sensors sind, wobei der Sensor eine gleichbleibende und bekannte Geometrie und ein bekanntes Heizverhalten aufweist und wobei der Sensor vor der Messung eingemessen wird, um aus der bekannten Geometrie des Sensors und aus der bekannten oder gemessenen Temperaturdifferenz zwischen der Membran und dem Rahmen und der zur Heizung der Membran notwendigen elektrischen Leistung die thermische Eigenschaft des fluiden Mediums, insbesondere die thermische Wärmeleitfähigkeit und/oder den Wasserstoff-Gehalt, den Kohlenwasserstoffgas-Gehalt oder den Heliumgehalt des fluiden Mediums, zu berechnen.

Hierdurch lässt sich die thermische Eigenschaft des fluiden Mediums reproduzierbarer und exakter bestimmen.

Ein Einmessen des Sensors erfolgt zumindest einmalig beim Herstellungsprozess des Sensors.

Die Geometrie des Sensors ist durch seine Abmessungen und seine Form bestimmt.

Bevorzugt kann vorgesehen sein, dass das Verfahren mit einem erfindungsgemäße oder zuvor beschriebenen Sensorelement oder mit einem mit einem erfindungsgemäßen oder zuvor beschriebenen Sensor durchgeführt wird.

Das Verfahren profitiert dadurch von den vorteilhaften Eigenschaften des Sensorelements beziehungsweise des Sensors.

Ferner kann vorgesehen sein, dass die Temperatur der Membran mindestens 5 °C und maximal 200 °C oberhalb der Temperatur des Rahmens gesteuert oder geregelt wird, bevorzugt die Temperatur der Membran mindestens 10 °C und maximal 150 °C oberhalb der Temperatur des Rahmens gesteuert oder geregelt wird, besonders bevorzugt die Temperatur der Membran mindestens 20 °C und maximal 100 °C oberhalb der Temperatur des Rahmens gesteuert oder geregelt wird.

Des Weiteren kann vorgesehen sein, dass die Temperatur der Membran bei mindestens 201 °C und maximal bei 350 °C gehalten wird, bevorzugt bei mindestens 210 °C und maximal bei 300 °C gehalten wird, besonders bevorzugt bei mindestens 220 °C und maximal bei 260 °C gehalten wird.

Auch kann vorgesehen sein, dass die Temperatur des Rahmens bei mindestens 135 °C und maximal bei 199 °C gehalten wird, bevorzugt bei mindestens 150 °C und maximal bei 195 °C gehalten wird, besonders bevorzugt bei mindestens 180 °C und maximal bei 190 °C gehalten wird.

Des Weiteren kann vorgesehen sein, dass die Temperatur der Membran derart gesteuert oder geregelt wird oder die Temperatur der Membran und die Temperatur des Rahmens derart gesteuert oder geregelt werden, dass der Mittelwert der Temperatur des Rahmens und der Temperatur der Membran bei mindestens bei 180 °C und maximal bei 220 °C liegt, bevorzugt bei mindestens 190 °C und maximal bei 210 °C liegt, besonders bevorzugt bei mindestens 195 °C und maximal bei 205 °C liegt.

Durch all diese Maßnahmen wird erreicht, dass die Messung in einem Temperaturbereich erfolgt, der im quasibinären Bereich liegt und dadurch der Bestimmung des Messgas-Gehalts, insbesondere des Wasserstoffgas-Gehalts, des Kohlenwasserstoffgas-Gehalts oder des Heliumgehalts, unabhängig von dem Wasserdampf oder Wassergas-Gehalt in dem fluiden Medium beziehungsweise im Gas oder in Gasen wie Luft, Sauerstoff oder Stickstoff (als das fluide Medium) bestimmt werden kann. Hierdurch wird insbesondere die Bestimmung des Wasserstoffgas-Gehalts, des Kohlenwasserstoffgas-Gehalts oder des Heliumgehalts in einem Gas bei unterschiedlichen Wassergas-Gehalten in den Gasen Luft, Sauerstoff oder Stickstoff wesentlich genauer.

Es kann auch vorgesehen sein, dass eine Temperatur eines separaten Volumens im Bereich des Rahmens mit einem freitragenden Draht gemessen wird, wobei die gemessene Temperatur des freitragenden Drahts zur Korrektur beim Bestimmen der thermischen Eigenschaft des fluiden Mediums, insbesondere der thermischen Wärmeleitfähigkeit und/oder des Wasserstoff-Gehalts, des Kohlenwasserstoffgas-Gehalts oder des Heliumgehalts des fluiden Mediums, in Schritt F) verwendet wird.

Die Wärmeleistung Q und die Messung können dabei vorzugsweise durch die definierte Geometrie und die Wärmeleitfähigkeit (als eine Funktion der Temperatur) beschrieben und dadurch wie folgt berechnet werden:

$$Q = \lambda(T) \ (A \ (Tq - Ts))/d$$

Dabei ist

$\lambda(T)$ die Funktion der Wärmeleitfähigkeit in Abhängigkeit von der Temperatur T;
A die Fläche der Wärmequelle (definierte freihängende Fläche der Membran, die durch das Heizelement elektrisch beheizt wird);
d ein definierter Abstand zwischen Wärmequelle und Wärmesenke (die Wände der Messkammer, die durch den Rahmen gebildet wird), wobei die Wände auch auf Übertemperatur beheizt werden können;
**Tq** die Temperatur der Wärmequelle (der Membran); und
**Ts** die Temperatur der Wärmesenke (das Rahmens).

Die Fläche des freitragenden Drahts beziehungsweise des freitragenden Widerstandsdrahts ist viel kleiner als die Fläche der freitragenden Membran. Dadurch erhält man zwei Messgrößen der Wärmeleitfähigkeit mit unterschiedlichen Flächen.

Bei gleichem Gas haben die beiden Messelemente unterschiedliche Wechselwirkung mit dem Druck. Durch eine Korrelationsmessung können die Druckeinflüsse digital (mit Hilfe eines mathematischen Modells) oder analog (mit einer Differenzial-Schaltung) kompensiert werden.

Hierdurch kann der freitragende Draht, der ein freitragender Widerstandsdraht ist, als Referenz verwendet werden. Dadurch lassen sich Einflüsse wie Druckänderungen oder Durchflussänderungen des zu messenden fluiden Mediums sehr gut kompensieren. Der freitragende Draht ist vorzugsweise in einem von dem Fluid-Volumen der Membran getrennten Fluid-Volumen angeordnet. Wenn der freitragende Draht einen eigenen Gaskanal oder ein eigenes Fluid-Volumen hat, kann die Wärme nicht durch Konvektion des Gases oder fluiden Mediums von der Membran als Wärmequelle zum freitragenden Draht als Referenz gelangen.

Bevorzugt kann auch vorgesehen sein, dass zum Bestimmen der Temperatur der Membran in Schritt D) das gleiche elektrische Heizelement auf der Membran verwendet wird, mit dem die Membran in Schritt A) geheizt wird.

Hierdurch kann ein besonders kompakter Aufbau der Membran erreicht werden, wodurch die Reproduzierbarkeit und Stabilität der Messung verbessert und die Einsatztemperatur der Membran vergrößert wird.

Ferner kann vorgesehen sein, dass die Temperatur der Membran durch eine erste selbstregelnde Wheatstone'sche Brückenschaltung konstant gehalten wird, wobei das elektrische Heizelement auf der Membran ein Teil der ersten selbstregelnden Wheatstone'schen Brückenschaltung ist, und/oder die Temperatur des Rahmens durch eine zweite selbstregelnde Wheatstone'sche Brückenschaltung oder durch einen digitalen oder computergesteuerten Regler konstant gehalten wird, wobei bevorzugt zumindest ein elektrisches Widerstandselement auf dem Rahmen und/oder ein elektrisches Heizelement auf dem Rahmen ein Teil der zweiten selbstregelnden Wheatstone'schen Brückenschaltung ist.

Hiermit wird auf einfache Weise die Temperatur der Membran geregelt und gleichzeitig die hierfür notwendige elektrische Leistung sehr leicht messbar gemacht, um daraus die thermische Eigenschaft des fluiden Mediums bestimmen zu können.

Es kann auch vorgesehen sein, dass ein Schritt H) erfolgt: H) Erhöhen oder Steuern oder Regeln der Temperatur des fluiden Mediums im Bereich eines Gaseintritts zur Membran in die Abdeckung und/oder Erhöhen oder Steuern oder Regeln der Temperatur der Abdeckung, wobei die Abdeckung ein mit der Umgebung gasdurchlässig verbundenes Gas-Volumen um die Membran begrenzt, bevorzugt durch eine Regelung der elektrischen Leistung zum Heizen des Rahmens oder einer separaten elektrischen Widerstandsheizeinrichtung.

Hierdurch kann die Bildung eines Kondensats in dem von der Abdeckung enthaltenen Messvolumen und dadurch eine Verfälschung des Messergebnisses oder eine Zerstörung des Messaufbaus verhindert werden.

Es kann vorgesehen sein, dass der Rahmen auf eine Temperatur gesteuert oder eingestellt wird, die höher ist als die Taupunkttemperatur der vorhandenen oder möglichen Kondensation im untersuchten Gas.

Hierdurch kann verhindert werden, dass sich Kondensat auf der Membran bildet und diese zerstört.

Der Erfindung liegt die überraschende Erkenntnis zugrunde, dass es durch das elektrische Heizelement auf der Membran getragen von dem Rahmen in Kombination mit dem zumindest einen Widerstandselement auf dem Rahmen des Sensorelements gelingt, eine Messanordnung bereitzustellen, mit der eine Wärmeübertragung von der Membran auf den Rahmen durch das das Sensorelement umgebende fluide Medium derart genau bestimmt werden kann, dass eine besonders exakte Bestimmung der Zusammensetzung, insbesondere des Wasserstoffgehalts, des Kohlenwasserstoffgas-Gehalts oder des Heliumgehalts möglich ist. Dadurch, dass mit dieser Anordnung die Temperatur, bei der das Sensorelement arbeitet, im Bereich von 200 °C gehalten werden kann, ist es möglich, den Wasserstoffgehalt, den Kohlenwasserstoffgas-Gehalt oder den Heliumgehalt eines Gases unabhängig von dem Wasserdampf-Gehalt zu bestimmen. Das elektrische Heizelement wird dabei nicht nur zum Heizen der Membran verwendet, sondern auch zur Bestimmung der Temperatur des elektrischen Heizelements auf der Membran.

Wenn eine Messkomponente aus mehreren Gasen besteht, die sich hinsichtlich ihrer Wärmeleitfähigkeit wie ein einziges Gas verhalten, spricht man bei einer binären Messung der Gasgemische von einem quasibinären Gasgemisch. Dies ist der Fall, wenn diese Komponenten dauerhaft in unveränderten Verhältnissen bleiben, wie zum Beispiel bei trockener, atmosphärischer Luft, oder wenn die Komponenten dieser Mischung die gleiche Wärmeleitfähigkeit haben.

Von allen Gasen hat Wasserstoff mit Abstand die höchste Wärmeleitfähigkeit. Das Gas mit der nächsthohen Wärmeleitfähigkeit ist Helium. Diese Tatsache, zusammen mit der hohen Stabilität und der einfachen Handhabung, macht die Wasserstoff- oder Helium-Messung mit der Wärmeleitfähigkeitsmethode besonders attraktiv und wird daher gerne angewendet.

Bei dem Sensorelement gemäß der vorliegenden Erfindung ist die Membran an sehr dünnen Stegen hängend gelagert. Durch diesen Aufbau ist die Membran vom Rahmen entkoppelt und es entsteht keine Temperaturabweichung aufgrund von Temperarturabflüssen von der Membran durch Festkörper hindurch. Das führt wiederrum zu einer homogenen Verteilung der Wärme auf der Membran. Gleichzeitig ist außer der Membran nur eine einzige Leiterbahn als elektrisches Heizelement auf der Membran angeordnet. Dies gelingt dadurch, dass das elektrische Heizelement auch als Temperaturmesselement verwendet werden kann. Dadurch müssen keine anderen Teile aufgeheizt werden und der Aufbau des Sensorelements ist vereinfacht. Gleichzeitig gelingt es, durch die starke Wärme-Entkopplung der Membran von dem Rahmen das elektrische Heizelement zuverlässig als Temperaturmesselement zu nutzen. Das zumindest eine elektrische Widerstandselement ist dagegen auf dem Rahmen angeordnet, so dass es die Masse der Membran mit dem elektrischen Heizelement nicht vergrößert und den Aufbau der Membran mit dem elektrischen Heizelement vereinfacht. Das hat gleichzeitig den überraschenden vorteilhaften kombinatorischen Nutzen, dass der Rahmen auf eine Temperatur gebracht werden kann, so dass die Messung bei Temperaturen erfolgen kann, bei denen die Feuchtigkeit in einem Gas wie Luft oder Sauerstoff keinen oder zumindest einen geringeren negativen Einfluss auf die Bestimmung der Wasserstoffkonzentration oder der Heliumkonzentration in dem Gas hat.

Das Fehlen einer katalytischen Schicht führt zum Verlust der Selektivität im Spurenbereich, bewirkt gleichzeitig aber eine höhere Messgenauigkeit der Wärmeleitfähigkeit des fluiden Mediums und eine Beseitigung einer Störquelle für die Messung der Wärmeleitfähigkeit des fluiden Mediums, die von chemischen Komponenten des fluiden Mediums verursacht wird, die mit der katalytischen Schicht chemisch reagieren. Die Selektivitätslosigkeit kann bei manchen Anwendungen bei der Messung vorteilhaft sein, da auf diese Weise der Ansatz beziehungsweise die Annäherung einer Messung von quasibinären Fluidgemischen beziehungsweise Gasgemischen verwendet beziehungsweise angewendet werden kann. Zudem ist das erfindungsgemäße Sensorelement aufgrund des Fehlens einer katalytischen Schicht gegenüber Vergiftungserscheinungen nicht anfällig.

Durch die Ausnehmungen ist sichergestellt, dass beide Seiten der Membran sich innerhalb desselben fluiden Mediums befinden. Dadurch können keine Druckunterschiede auf den beiden Seiten der Membran entstehen. Hierdurch wird eine Verformung der Membran aufgrund von Druckunterschieden verhindert. Das bedeutet, dass eine Verfälschung des Messergebnisses der Wärmeleitfähigkeit aufgrund einer Verformung der Membran und dem auf der Membran angeordneten elektrischen Heizelement ausgeschlossen beziehungsweise verringert ist. Auf diese Weise kann eine höhere Messgenauigkeit mit dem Sensorelement erzielt werden. Zusätzlich kann das erfindungsgemäße Sensorelement auch unter hohen Drucken Arbeiten, ohne zerstört zu werden. Die Druckänderungen haben bei dem erfindungsgemäßen Sensorelement nur aufgrund der Veränderung der mittleren freien Weglänge der Gasmoleküle Einfluss. Dieser Effekt ist bei normalen und hohen Drucken sehr gering und kann in den meisten Fällen vernachlässigt werden. Die Änderungen des Druckes würden Sensorelemente und Sensoren ohne Ausnehmungen und mit einer geschlossenen Membran schon zu einem viel früheren Zeitpunkt zerstören als erfindungsgemäße Sensorelemente und Sensoren.

Durch den Aufbau mit den Stegen und den Ausnehmungen ist die Wärmeableitung von der Membran auf den Rahmen durch den Festkörper drastisch reduziert beziehungsweise fast nicht vorhanden. Die Struktur des erfindungsgemäßen Sensorelements und des erfindungsgemäßen Sensors mit Stegen ist dadurch viel robuster, da keine thermischen Spannungen innerhalb einer mit dem Rahmen verbundenen Fläche der Membran auftreten können. Die Differenztemperatur zwischen der Wärmequelle und Wärmesenke kann dadurch größer sein. Dadurch wird eine bessere Signalgüte beziehungsweise Signalhub erzielt. Ferner erfordert die Membranheizung durch die bessere Abkopplung weniger Leistung. Zudem kann die Fläche des Chips (des Rahmens) und die Fläche der Membran gegenüber herkömmlichen Sensorelementen ohne Stege und Ausnehmungen der Membran zu dem Rahmen zumindest halbiert werden. Mit dem erfindungsgemäßen Aufbau kann der Chip beziehungsweise der Rahmen eine Fläche von 2 mal 2 mm$^2$ aufweisen und die Membran eine Fläche von bis zu 0,3 mal 0,3 mm$^2$. Durch eine kleinere Membran kann die Messkammer kleiner gestaltet werden. Dadurch ist der Austausch des Gases schneller, insbesondere wenn das Gas in der Messkammer durch Diffusionsprozesse ausgetauscht werden soll. Alternativ oder auch gleichzeitig kann die Tiefe beziehungsweise die Höhe der Messkammer größer gewählt werden, wodurch das Sensorelement weniger Leistung benötigt, und die Druckabhängigkeit reduziert wird.

Bei herkömmlichen Sensoren und Sensorelementen mit durchgehenden Membranen und ohne Stege müssen die elektrischen Heizelemente auf der Membran größtmöglichen Abstand zu dem Rand der Membran haben, damit die Wärmeableitung minimiert wird. Im Gegensatz dazu kann bei einem erfindungsgemäßen Sensor die komplette Membran mit den Leiterbahnen des elektrischen Heizelements bedeckt sein. Dadurch ist die Homogenität der Temperaturverteilung über der Membran besser.

Bei erfindungsgemäßen Sensorelementen und Sensoren können die elektrischen Kontakte beziehungsweise Kontaktfelder und die Öffnung der Messkammer räumlich voneinander getrennt sein. Das ermöglicht die Kontakte mit beständigem Material zu vergießen, ohne die Messkammer-Öffnung zu verschließen.

Im Folgenden werden Ausführungsbeispiele der Erfindung anhand von zehn schematisch dargestellten Figuren und einem Ablaufdiagramm erläutert, ohne jedoch dabei die Erfindung zu beschränken. Dabei zeigt:

Figur 1: eine schematische Aufsicht auf ein erstes erfindungsgemäßes Sensorelement;

Figur 2: oben eine schematische Aufsicht auf das Sensorelement nach Figur 1 mit einer Abdeckung und unten eine schematische Vorderansicht des Sensorelements nach Figur 1 mit der Abdeckung;

Figur 3: eine schematische Querschnittansicht auf den in Figur 2 oben gezeigten Schnitt entlang der Strich-Punkt-Linie A-A;

Figur 4: eine schematische Aufsicht auf ein zweites erfindungsgemäßes Sensorelement;

Figur 5: oben eine schematische Aufsicht auf das Sensorelement nach Figur 4 mit einer Abdeckung und unten eine schematische Vorderansicht des Sensorelements nach Figur 4 mit der Abdeckung;

Figur 6: eine schematische Querschnittansicht auf den in Figur 5 oben gezeigten Schnitt entlang der Strich-Punkt-Linie B-B;

Figur 7: eine perspektivische Ansicht eines erfindungsgemäßen Sensorelements auf einer Platine zur elektrischen Kontaktierung;

Figur 8: eine schematische Querschnittansicht eines Kopfs eines erfindungsgemäßen Sensors, in dem das erfindungsgemäße Sensorelement auf der Platine nach Figur 7 verbaut ist;

Figur 9: eine schematische Querschnittansicht eines anderen Kopfs eines weiteren erfindungsgemäßen Sensors, in dem das erfindungsgemäße Sensorelement auf der Platine nach Figur 7 verbaut ist;

Figur 10: die Wärmeleitfähigkeit in W / m K in Abhängigkeit von der Temperatur in °C von gasförmigem Wasserstoff, Wasser, Luft und Sauerstoff; und

Figur 11: den Ablauf eines erfindungsgemäßen Verfahrens zur Bestimmung mindestens einer thermischen Eigenschaft eines fluiden Mediums.

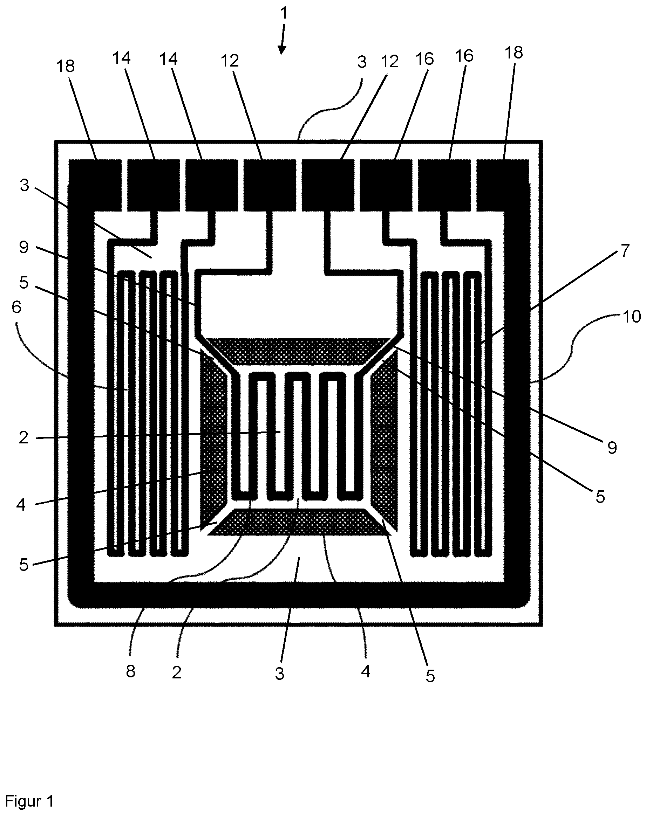

Die Figuren 1 bis 3 zeigen verschiedene schematische Ansichten eines ersten erfindungsgemäßen Sensorelements 1.

Das Sensorelement 1 weist eine Membran 2 und einen Rahmen 3 auf. Der Rahmen 3 kann aus Silizium oder aus einer Keramik, insbesondere aus einer Aluminiumoxidkeramik bestehen. Die Membran 2 wird von dem Rahmen 3 gehalten und kann ansonsten freischwebend gelagert sein. Die Membran 2 kann aus Siliziumnitrid bestehen. Die Membran 2 ist physisch mit Ausnehmungen 4 bereichsweise von dem Rahmen 3 getrennt. Zur Halterung der Membran 2 an dem Rahmen 3 kann die Membran 2 über Stege 5 mit der Membran 2 verbunden sein. Die Ausnehmungen 4 werden bevorzugt nur von den Stegen 5 überbrückt. Die Stege 5 bestehen bevorzugt aus dem gleichen Material wie die Membran 2 selbst.

Eine solche Struktur kann beispielsweise dadurch hergestellt werden, in dem zunächst ein Silizium-Körper mit einer Siliziumnitrid-Schicht beschichtet wird. Anschließend werden mit bekannten Belichtungs- und Ätzverfahren die Ausnehmungen 4 in der Siliziumnitrid-Schicht erzeugt und der Silizium-Körper wird unterhalb des Teils der Siliziumnitrid-Schicht, die für die Membran 2 vorgesehen ist, entfernt. Dadurch entsteht eine freischwebende Membran 2, die über Stege 5 zwischen den Ausnehmungen 4 mit einem Rahmen 3 verbunden ist.

Das Sensorelement 1 nach Figur 1 weist ein erstes elektrisches Widerstandselement 6 auf. Das erste elektrische Widerstandselement 6 kann in Form einer Leiterbahn auf dem Rahmen 3 angeordnet sein und kann als mäandrierende Leiterbahn ausgebildet sein. Mit dem ersten elektrischen Widerstandselement 6 kann die Temperatur des Rahmens 3 gemessen werden. Das Sensorelement 1 kann auch ein zweites elektrisches Widerstandselement 7 aufweisen. Das zweite elektrische Widerstandselement 7 kann in Form einer Leiterbahn auf der bezüglich der Membran 2 gegenüberliegenden Seite auf dem Rahmen 3 angeordnet sein und kann ebenfalls als mäandrierende Leiterbahn ausgebildet sein. Mit dem zweiten elektrischen Widerstandselement 7 kann ebenfalls die Temperatur des Rahmens 3 gemessen werden.

Das erste elektrische Widerstandselement 6 und das zweite elektrische Widerstandselement 7 bestehen vorzugsweise aus Nickel und können den Rahmen 3, zumindest in dem Bereich der elektrischen Widerstandselemente 6, 7, auf eine bestimmte Temperatur erhitzen, insbesondere die Siliziumstruktur als Rahmen 3 auf eine bestimmte Temperatur erhitzen. Alternativ oder zusätzlich können die elektrischen Widerstandselements 6, 7 zur Messung der Temperatur des Rahmens 3 verwendet werden. Diese Temperatur des Rahmens 3 soll während der Messung niedriger sein als die Temperatur der Membran 2, damit der Rahmen 3 als Wärmesenke fungieren kann.

Auf der Membran 2 ist ein elektrisches Heizelement 8 angeordnet, das sowohl zum Heizen als auch zum Messen der Temperatur verwendet werden kann. Das elektrische Heizelement 8 kann als mäandrierende Leiterbahn auf der Membran 2 ausgeführt sein. Das elektrische Heizelement 8 besteht vorzugsweise aus Nickel. Das elektrische Heizelement 8 ist über Anschlussleiterbahnen 9 elektrisch kontaktiert, so dass die Anschlussleiterbahnen 9 das elektrische Heizelement 8 bis auf den Rahmen 3 elektrisch verbinden. Die Anschlussleiterbahnen 9 können aus den gleichen Leiterbahnen aufgebaut sein, wie das elektrische Heizelement 8. Die Anschlussleiterbahnen 9 können über zwei unterschiedliche Stege 5 geführt werden, so wie das in Figur 1 gezeigt ist. Alternativ könnten die Anschlussleiterbahnen 9 auch über einen einzigen Steg 5 geführt werden (nicht gezeigt).

Auf den Rahmen 3 kann zum Heizen des Rahmens 3 ein äußeres elektrisches Heizelement 10 angeordnet sein. Das äußere elektrische Heizelement 10 kann die elektrischen Widerstandselemente 6, 7 und die Membran 2 im Bereich von äußeren Enden des Rahmens 3 umrahmen. Bei der in Figur 1 gezeigten Ausführung ist eine Umrahmung auf drei Seiten des Sensorelements 1 zu erkennen. Das äußere elektrische Heizelement 10 kann als eine äußere Leiterbahn ausgeführt sein. Das äußere elektrische Heizelement 10 kann aus Nickel bestehen. Das äußere elektrische Heizelement 10 kann durch eine Leiterbahn realisiert werden, die breiter ist als die der elektrischen Widerstandselemente 6, 7 und als des elektrischen Heizelements 8 auf der Membran 2. Dadurch kann ein stärkerer Strom bei niedriger Spannung durch das äußere elektrische Heizelement 10 geleitet werden, ohne dass eine Zerstörung des äußeren elektrischen Heizelements 10 zu befürchten ist. Da der Rahmen 3 eine wesentlich höhere Wärmekapazität aufweist als die Membran 2, ist im Rahmen 3 eine höhere Heizleistung angebracht als bei der Membran 2. Die elektrischen Widerstandselement 6, 7 können zusätzlich zum Heizen des Rahmens 3 auf eine gewünschte Temperatur verwendet werden.

Das elektrische Heizelement 8 auf der Membran 2 kann über die Anschlussleiterbahnen 9 mit Kontaktfeldern 12 elektrisch verbunden sein. Das erste elektrische Widerstandselement 6 kann mit Kontaktfeldern 14 elektrisch verbunden sein. Das zweite elektrische Widerstandselement 7 kann mit Kontaktfeldern 16 elektrisch verbunden sein. Das äußere elektrische Heizelement 10 kann mit Kontaktfeldern 18 elektrisch verbunden sein. Die Kontaktfelder 12, 14, 16, 18 können aus dem gleichen Material bestehen wie die Leiterbahnen, die die elektrischen Widerstandselement 6, 7, das elektrische Heizelement 8, die Anschlussleiterbahnen 9 und das äußere elektrische Heizelement 10 bilden. Insbesondere können die Kontaktfelder 12, 14, 16, 18 aus Nickel bestehen. Die Kontaktfelder 12, 14, 16, 18 sind vorzugsweise breiter beziehungsweise haben einen größeren Durchmesser als die mit Ihnen verbundenen Leiterbahnen. Bevorzugt sind alle Kontaktfelder 12, 14, 16, 18 an einer Seite des Rahmens 3 auf dem Rahmen 3 angeordnet.

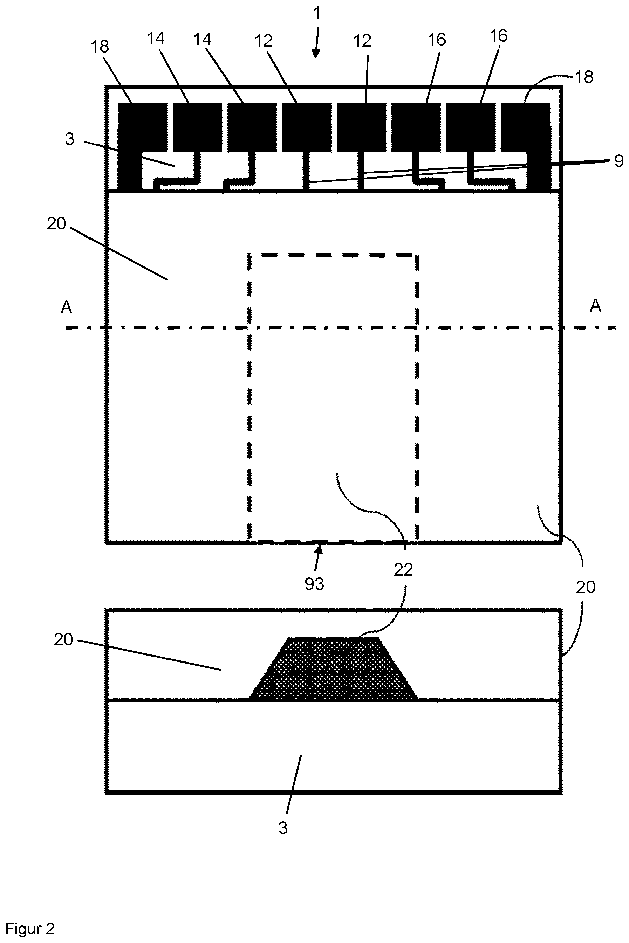

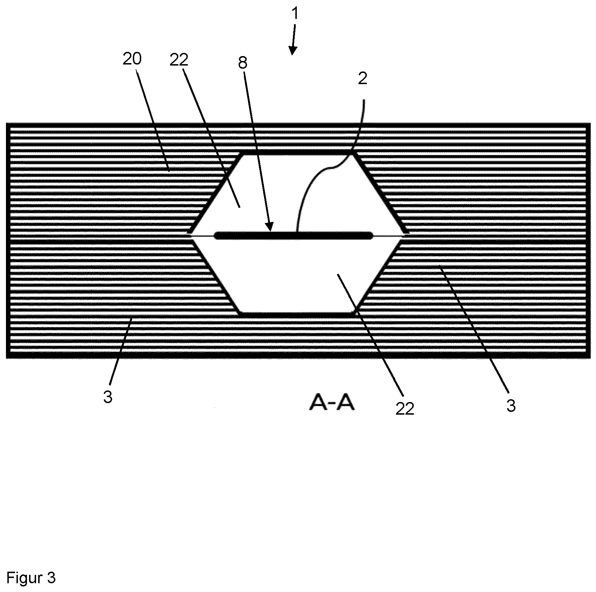

Das in Figur 1 gezeigte Sensorelement 1 ist bereits fast vollständig. Das Sensorelement 1 noch eine Abdeckung 20 auf, die ein Fluid-Volumen 22 beziehungsweise ein Gas-Volumen um die Membran 2 herum einschließt, wobei das Fluid-Volumen 22 beziehungsweise Gas-Volumen eine Messkammer für das zu messende fluide Medium beziehungsweise Gas bildet. Dies ist in den Figuren 2 und 3 gezeigt. Der Aufbau auf dem Rahmen 3 und auf der Membran 2 ist identisch mit dem in Figur 1 gezeigten Sensorelement 1. Die Abdeckung 20 deckt lediglich die Leiterbahnen, die Membran 2 und die in Figur 1 gezeigte Oberseite des Rahmens 3 bis auf die Kontaktfelder 12, 14, 16, 18 und daran angrenzende Bereiche ab, so wie das in Figur 2 oben zu sehen ist. Das Gas-Volumen kann über eine Gaseintrittsöffnung 93 zugänglich sein. Bevorzugt kann dabei vorgesehen sein, dass die Leiterbahnen auf dem Rahmen 3 im Bereich der Gaseintrittsöffnung 93 freiliegen.

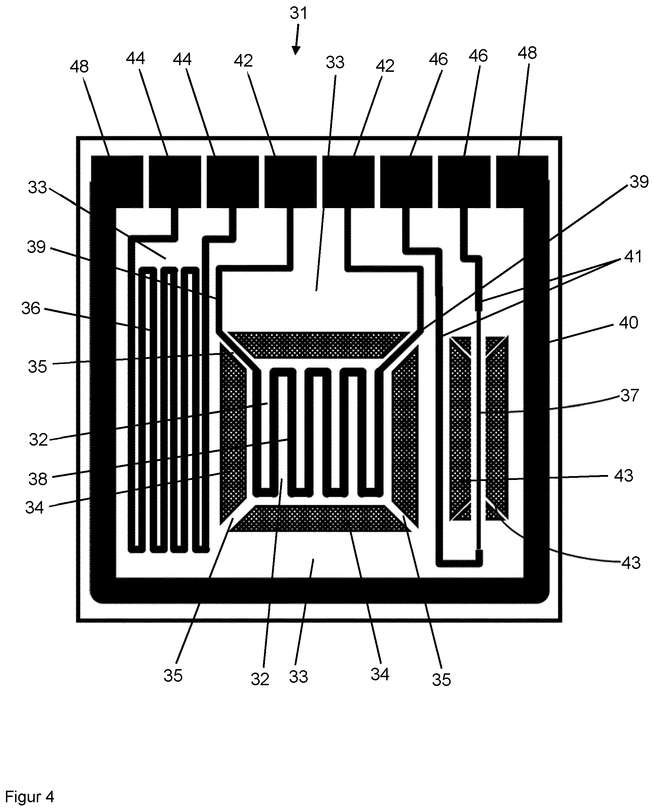

Die Figuren 4 bis 6 zeigen verschiedene schematische Ansichten eines zweiten erfindungsgemäßen Sensorelements 31. Das Sensorelement 31 unterscheidet sich von dem Sensorelement 1 nach den Figuren 1 bis 3 vor allem durch das Vorhandensein eines freitragenden Drahts 37, der als Referenzmessstelle verwendet werden kann, um das Messergebnis zu verbessern und Störgrößen eliminieren zu können.

Das Sensorelement 31 weist eine Membran 32 und einen Rahmen 33 auf. Der Rahmen 33 kann aus Silizium oder aus einer Keramik, insbesondere einer Aluminiumoxidkeramik bestehen. Die Membran 32 wird von dem Rahmen 33 gehalten und kann ansonsten freischwebend gelagert sein. Die Membran 32 kann aus Siliziumnitrid bestehen. Die Membran 32 ist physisch mit Ausnehmungen 34 bereichsweise von dem Rahmen 33 getrennt. Zur Halterung der Membran 32 an dem Rahmen 33 kann die Membran 32 über Stege 35 mit der Membran 32 verbunden sein. Die Ausnehmungen 34 werden bevorzugt nur von den Stegen 35 überbrückt. Die Stege 35 bestehen bevorzugt aus dem gleichen Material wie die Membran 32 selbst.

Eine solche Struktur kann beispielsweise dadurch hergestellt werden, in dem zunächst ein Silizium-Körper mit einer Siliziumnitrid-Schicht beschichtet wird. Anschließend werden mit bekannten Belichtungs- und Ätzverfahren die Ausnehmungen 34 in der Siliziumnitrid-Schicht erzeugt und der Silizium-Körper wird unterhalb des Teils der Siliziumnitrid-Schicht, die für die Membran 32 vorgesehen ist, entfernt. Dadurch entsteht eine freischwebende Membran 32, die über Stege 35 zwischen den Ausnehmungen 34 mit einem Rahmen 33 verbunden ist.

Das Sensorelement 31 nach Figur 4 weist ein elektrisches Widerstandselement 36 auf. Das elektrische Widerstandselement 36 kann in Form einer Leiterbahn auf dem Rahmen 33 angeordnet sein und kann als mäandrierende Leiterbahn ausgebildet sein. Mit dem elektrischen Widerstandselement 36 kann die Temperatur des Rahmens 33 gemessen werden. Alternativ oder zusätzlich kann das elektrische Widerstandselement 36 zum Heizen des Rahmens 33 verwendet werden. Das Sensorelement 31 kann zusätzlich einen freitragenden Draht 37 aufweisen, der in einem Freiraum freitragend angeordnet ist und der über Ausnehmungen 43 von dem Rahmen 33 räumlich getrennt ist. Der freitragende Draht 37 kann über Anschlussleiterbahnen 41 auf dem Rahmen 33 mit Kontaktfeldern 46 auf dem Rahmen 33 verbunden sein. Mit dem freitragenden Draht 37 kann die Temperatur eines Körpers mit einer im Vergleich zur Membran 32 sehr kleinen Oberfläche als Referenzwert gemessen werden.

Das elektrische Widerstandselement 36 besteht vorzugsweise aus Nickel und kann den Rahmen 33 auf eine bestimmte Temperatur erhitzen, insbesondere die Siliziumstruktur als Rahmen 33 auf eine bestimmte Temperatur erhitzen.

Der freitragende Draht 37 besteht vorzugsweise aus Nickel. Diese Temperatur des Rahmens 33 soll während der Messung niedriger sein als die Temperatur der Membran 32, damit der Rahmen 33 als Wärmesenke fungieren kann.

Auf der Membran 32 ist ein elektrisches Heizelement 38 angeordnet, das sowohl zum Heizen als auch zum Messen der Temperatur verwendet werden kann. Das elektrische Heizelement 38 kann als mäandrierende Leiterbahn auf der Membran 32 ausgeführt sein. Das elektrische Heizelement 38 besteht vorzugsweise aus Nickel. Das elektrische Heizelement 38 ist über Anschlussleiterbahnen 39 elektrisch kontaktiert, so dass die Anschlussleiterbahnen 39 das elektrische Heizelement 38 bis auf den Rahmen 33 elektrisch verbinden. Die Anschlussleiterbahnen 39 können aus den gleichen Leiterbahnen aufgebaut sein, wie das elektrische Heizelement 38. Die Anschlussleiterbahnen 39 können über zwei unterschiedliche Stege 35 geführt werden, so wie das in Figur 4 gezeigt ist. Alternativ könnten die Anschlussleiterbahnen 39 auch über einen einzigen Steg 35 geführt werden (nicht gezeigt).

Auf den Rahmen 33 kann zum Heizen des Rahmens 33 ein äußeres elektrisches Heizelement 40 angeordnet sein. Das äußere elektrische Heizelement 40 kann das elektrische Widerstandselemente 36, den freitragenden Draht 37, die Anschlussleiterbahnen 41 und die Membran 32 im Bereich von äußeren Enden des Rahmens 33 umrahmen. Bei der in Figur 4 gezeigten Ausführung ist eine Umrahmung auf drei Seiten des Sensorelements 31 zu erkennen. Das äußere elektrische Heizelement 40 kann als eine äußere Leiterbahn ausgeführt sein. Das äußere elektrische Heizelement 40 kann aus Nickel bestehen. Das äußere elektrische Heizelement 40 kann durch eine Leiterbahn realisiert werden, die breiter ist als die des elektrischen Widerstandselements 36 und als des elektrischen Heizelements 38 auf der Membran 32. Dadurch kann ein stärkerer Strom bei niedriger Spannung durch das äußere elektrische Heizelement 40 geleitet werden, ohne dass eine Zerstörung des äußeren elektrischen Heizelements 40 zu befürchten ist. Da der Rahmen 33 eine wesentlich höhere Wärmekapazität aufweist als die Membran 32, ist im Rahmen 33 eine höhere Heizleistung angebracht als bei der Membran 32. Das elektrische Widerstandselement 6 kann zusätzlich zum Heizen des Rahmens 33 auf eine gewünschte Temperatur verwendet werden.

Das elektrische Heizelement 38 auf der Membran 32 kann über die Anschlussleiterbahnen 39 mit Kontaktfeldern 42 elektrisch verbunden sein. Das elektrische Widerstandselement 36 kann mit Kontaktfeldern 44 elektrisch verbunden sein. Der freitragende Draht 37 kann über die Anschlussleiterbahn 41 mit den Kontaktfeldern 46 elektrisch verbunden sein. Das äußere elektrische Heizelement 40 kann mit Kontaktfeldern 48 elektrisch verbunden sein. Die Kontaktfelder 42, 44, 46, 48 können aus dem gleichen Material bestehen wie die Leiterbahnen, die das elektrische Widerstandselement 36, der freitragende Draht 37, das elektrische Heizelement 38, die Anschlussleiterbahnen 39, 41 und das äußere elektrische Heizelement 40 bilden. Insbesondere können die Kontaktfelder 42, 44, 46, 48 aus Nickel bestehen. Die Kontaktfelder 42, 44, 46, 48 sind vorzugsweise breiter beziehungsweise haben einen größeren Durchmesser als die mit Ihnen verbundenen Leiterbahnen. Bevorzugt sind alle Kontaktfelder 42, 44, 46, 48 an einer Seite des Rahmens 33 auf dem Rahmen 33 angeordnet.

Das in Figur 4 gezeigte Sensorelement 31 ist bereits fast vollständig. Das Sensorelement 31 weist noch eine Abdeckung 50 auf, die ein Fluid-Volumen 52 beziehungsweise ein Gas-Volumen um die Membran 32 herum einschließt, wobei das Fluid-Volumen 52 beziehungsweise Gas-Volumen das Innere einer Messkammer für das zu messende fluide Medium beziehungsweise das zu messende Gas bildet. Zusätzlich schließt die Abdeckung 50 bei dem vorliegenden zweiten Ausführungsbeispiel ein Fluid-Volumen 54 beziehungsweise ein Gas-Volumen um den freitragenden Draht 37 ein. Dieses Fluid-Volumen 54 beziehungsweise Gas-Volumen bildet den Innenraum einer Referenzmesskammer.

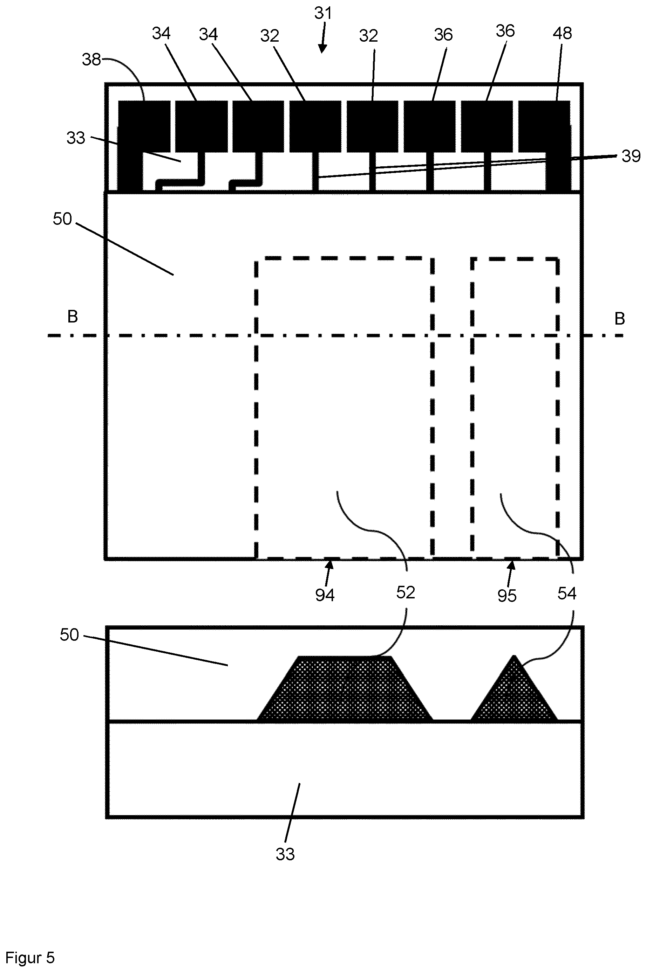

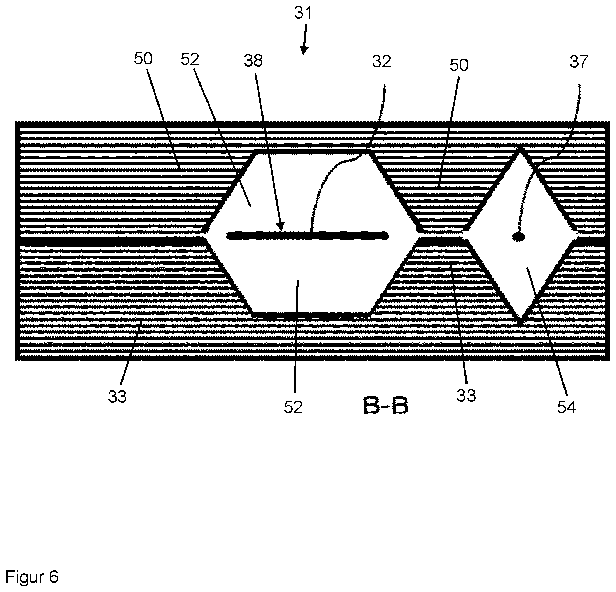

Dies ist in den Figuren 5 und 6 gezeigt. Der Aufbau auf dem Rahmen 33 und auf der Membran 32 ist identisch mit dem in Figur 4 gezeigten Sensorelement 31. Die Abdeckung 50 deckt lediglich die Leiterbahnen, die Membran 32 und die in Figur 4 gezeigte Oberseite des Rahmens 33 bis auf die Kontaktfelder 42, 44, 46, 48 und daran angrenzende Bereiche ab, so wie das in Figur 5 oben zu sehen ist.

Das Fluid-Volumen 52 beziehungsweise Gas-Volumen um die Membran 32 kann über eine Gaseintrittsöffnung 94 zugänglich sein. Bevorzugt kann dabei vorgesehen sein, dass die Leiterbahnen auf dem Rahmen 33 im Bereich der Gaseintrittsöffnung 94 zur Membran 32 freiliegen. Das Fluid-Volumen 54 beziehungsweise Gas-Volumen um den freitragenden Draht 37 kann über eine Gaseintrittsöffnung 95 zugänglich sein. Bevorzugt kann dabei vorgesehen sein, dass die Leiterbahnen auf dem Rahmen 33 im Bereich der Gaseintrittsöffnung 95 zum freitragenden Draht 37 freiliegen.

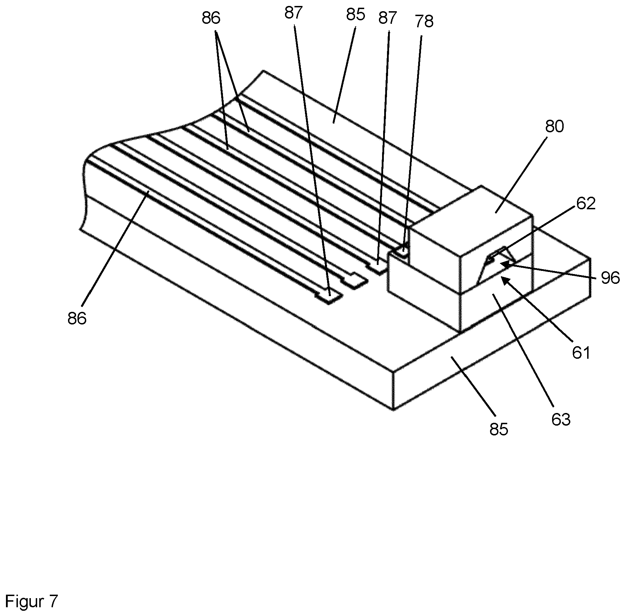

Figur 7 zeigt eine perspektivische Ansicht eines erfindungsgemäßen Sensorelements 61 auf einer Platine 85 zur elektrischen Kontaktierung des Sensorelements 61. Das Sensorelement kann wie das Sensorelement 1 nach den Figuren 1 bis 3 oder kann wie das Sensorelement 31 nach den Figuren 4 bis 6 aufgebaut sein. Das Sensorelement 61 weist analog dem ersten und dem zweiten Ausführungsbeispiel eine freitragende Membran 62 auf, die von einem Rahmen 63 getragen wird. Das Sensorelement 61 kann Kontaktfelder 78 zur elektrischen Kontaktierung eines elektrischen Heizelements (in den Figuren 7 bis 9 nicht zu erkennen) auf der Membran 62 und zumindest eines elektrischen Widerstandselements (in den Figuren 7 bis 9 nicht zu erkennen) auf dem Rahmen 63 aufweisen. Eine Abdeckung 80 ist vorgesehen, um ein Fluid-Volumen 82 als Messkammer einzuschließen. Das Fluid-Volumen 82 kann über eine Gaseintrittsöffnung 96 zugänglich sein. Bevorzugt kann dabei vorgesehen sein, dass die Leiterbahnen auf dem Rahmen 63 im Bereich der Gaseintrittsöffnung 96 freiliegen.

Auf der Platine 85 sind Leiterbahnen 86 angeordnet, die in verbreiterten Kontaktpads 87 enden. Neben den Kontaktpads 87 kann das Sensorelement 61 auf der Platine 85 befestigt sein. Jedes der Kontaktpads 87 kann mit Hilfe eines Bonddrahts (in Figur 7 nicht zu erkennen) mit einem der Kontaktfelder 78 verbunden sein.

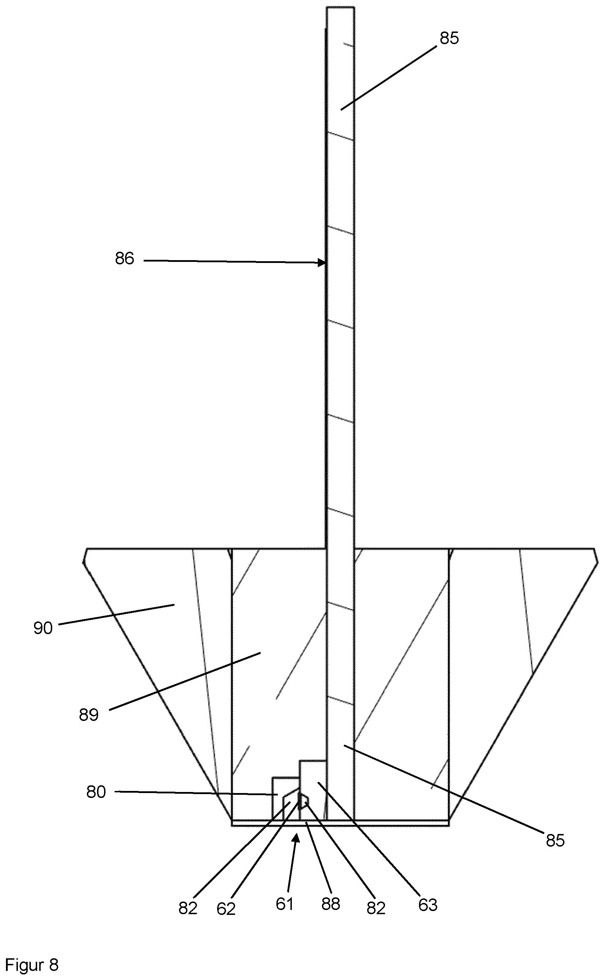

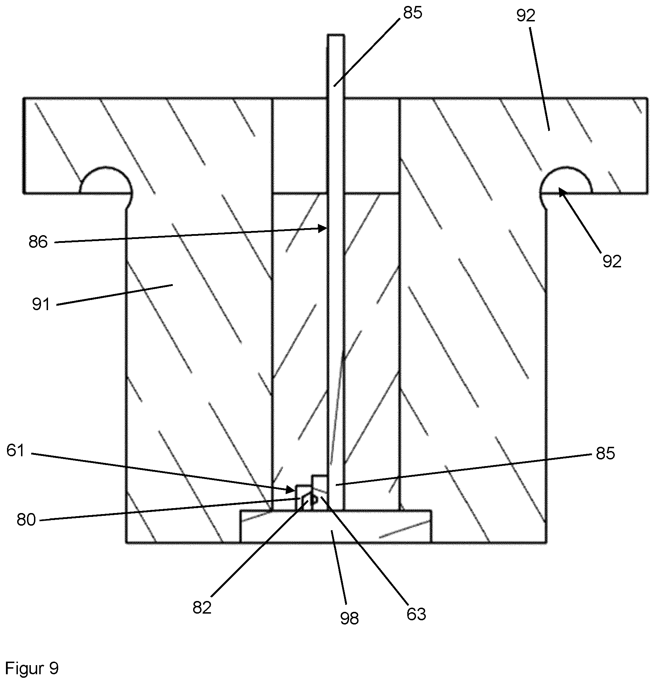

Die Anordnung der Kontaktpads 87 und der Gaseintrittsöffnung 96 auf gegenüberliegenden Seiten des Sensors ermöglicht ein Gehäusedesign, das es erlaubt, die Kontaktpads 87 abzudichten oder zu vergießen, ohne die Gaseintrittsöffnung zu blockieren. Dadurch können die ansonsten ungeschützten Kontaktpads nachträglich vor dem Eindringen von Gas geschützt werden, was besonders wichtig ist, da korrosive Gase die Kontakte angreifen könnten. Die Vorteile dieser Designlösung werden in den Ausführungsbeispielen der Figuren 8 und 9 detailliert dargestellt und beschrieben.

Figur 8 zeigt eine schematische Querschnittansicht eines Kopfs eines erfindungsgemäßen Sensors, in dem das erfindungsgemäße Sensorelement 61 auf der Platine 85 nach Figur 7 verbaut ist. Die Platine 85 ist in einem Gehäuse 89 mit einem äußeren Konus 90 befestigt. Das Gehäuse 89 mit dem Konus 90 kann dann in einer passenden Bohrung verbaut werden. An der Vorderseite des Sensorelements 61 kann ein Filter 88 angeordnet sein, der für das zu messende Gas durchlässig ist. Der Filter 88 kann beispielsweise ein Sintermetallfilter sein.

Der Filter 88 kann bevorzugt aus Edelstahl oder PTFE bestehen aber auch aus beliebigen anderen Materialien bestehen. Durch Diffusion kann das zu messende Gas durch den Filter 88 in die Messkammer des Sensorelements 61 gelangen. Dadurch wird die Messung nicht aufgrund von Strömungen des Gases verfälscht. Gleichzeitig schützt der Filter 88 das Sensorelement durch Beschädigung und Verschmutzung.

Figur 9 zeigt eine schematische Querschnittansicht eines anderen Kopfs eines weiteren erfindungsgemäßen Sensors, in dem das erfindungsgemäße Sensorelement 61 auf der Platine 85 nach Figur 7 verbaut ist. Die Platine 85 ist in einem Gehäuse 91 mit einer umlaufenden Nut 91 befestigt. Das Gehäuse 91 kann dann in einer passenden Bohrung verbaut werden und über einen in der Nut 91 angeordneten O-Ring (nicht gezeigt) abgedichtet werden. An der Vorderseite des Sensorelements 61 kann ein Filter 98 angeordnet sein, der für das zu messende Gas durchlässig ist. Der Filter 98 kann beispielsweise ein Sintermetallfilter sein. Der Filter 98 kann bevorzugt aus Edelstahl oder PTFE bestehen aber auch aus beliebigen anderen Materialien bestehen. Durch Diffusion kann das zu messende Gas durch den Filter 98 in die Messkammer des Sensorelements 61 gelangen. Dadurch wird die Messung nicht aufgrund von Strömungen des Gases verfälscht. Gleichzeitig schützt der Filter 98 das Sensorelement durch Beschädigung und Verschmutzung.

Auf der von dem Sensorelement 61 abgewandten Seite der Platine 85 kann der Sensor nach Figur 8 und der Sensor nach Figur 9 mit zumindest einer Schaltung zur Auswertung und mindestens eine selbstregelnde Wheatstone'schen Brücke (nicht gezeigt) zum Bestimmen und Regeln der Heizspannung des elektrischen Heizelements und damit der Temperatur des elektrischen Heizelements auf der Membran 62 sowie zum Bestimmen und Regeln der Temperatur des Rahmens 63 über das zumindest eine elektrische Widerstandselement verbunden sein. Diese sind über die Leiterbahnen 86 mit den jeweiligen Leiterbahnen des Sensorelements 61 verbunden. Die mindestens eine selbstregelnde Wheatstone'schen Brücke kann auf einer separaten Platine angeordnet sein. Alternativ kann die selbstregelnde Wheatstone'schen Brücke auch auf dem Sensorchip beziehungsweise auf dem Sensorelement 61 angeordnet werden. Es ist grundsätzlich auch möglich andere aktive Elemente wie Operationsverstärker, AD-Wandler oder Interfaces unmittelbar auf dem Sensorchip beziehungsweise auf dem Sensorelement 61 aufzubauen und zu implementieren. Als Signal kann der Sensor einen Wert für die Wärmeleitfähigkeit des fluiden Mediums ausgeben.

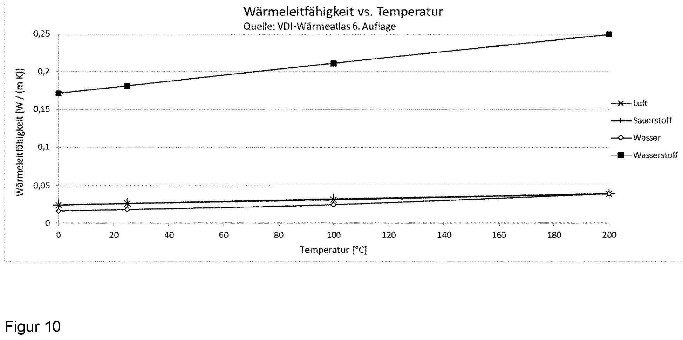

Figur 10 zeigt die Wärmeleitfähigkeit in W /(m K) in Abhängigkeit von der Temperatur in °C von gasförmigem Wasserstoff, Wasser, Luft und Sauerstoff. Die Wärmeleitfähigkeitsdifferenz λ (T), z. B. bei einer Temperatur T von 100 °C, zwischen Luft und gasförmigem Wasser ist etwa 25-mal kleiner als zwischen trockener Luft und Wasserstoff. Somit kann Wasserstoff in feuchter Luft noch gut nachgewiesen werden, aber die hohen Anforderungen an die Messgenauigkeit werden nicht ausreichend erfüllt. Die Kennlinien der Wärmeleitfähigkeit (als Funktion der Temperatur) von Luft und ihren Bestandteilen Stickstoff und Sauerstoff sowie von gasförmigem Wasser und Wasserstoff haben alle eine positive, aber unterschiedlich steile Steigung. In Figur 10 ist zu sehen, wie sich die Wärmeleitfähigkeit von Luft und gasförmigem Wasser bei einer Temperatur von ungefähr 200 °C überschneiden und zusammen mit Wasserstoff ein quasibinäres Gasgemisch bilden. Außerdem steigt die absolute Wärmeleitfähigkeit von Wasserstoff, was sich positiv auf die Empfindlichkeit der Wasserstoffmessung auswirkt.

Die Umwandlung von feuchter Luft mit unterschiedlichen $H_2O$-Konzentrationen in ein quasibinäres Gasgemisch kann erfindungsgemäß erreicht werden, wenn der Sensor beziehungsweise das Sensorelement 1, 31, 61 möglichst exakt auf eine Solltemperatur im Bereich von 200 °C eingestellt ist. Dabei sollen erfindungsgemäß sowohl die Temperatur der Wärmequelle auf der Membran 2, 32, 62 als auch die der Wärmesenke (des Rahmens 3, 33, 63) gemessen und kontrolliert werden. Andere schwankende Parameter wie Druck oder Durchflussmenge des fluiden Mediums sollen kompensiert oder konstant gehalten werden. Die Kompensation kann durch eine geeignete Referenzmessung durchgeführt werden beziehungsweise ermöglicht werden.

Die Membran 2, 32, 62, die bevorzugt eine Siliziumnitrid-Membran oder eine Aluminiumoxid-Membran oder eine Siliziumoxid-Membran ist und auf der das elektrische Heizelement 8, 38 angeordnet ist, ist als aufgehängte Membran 2, 32, 62 weitgehend frei von mechanischen Spannungen. Besonders bevorzugt ist die Membran 2, 32, 62 eine Siliziumnitrid-Membran oder eine Siliziumoxid-Membran und ganz besonders bevorzugt eine Siliziumnitrid-Membran. Die Membran 2, 32, 62 kann als Mikro-Elektro-Mechanisches System (MEMS) ausgeführt sein. Die Membran 2, 32, 62 kann erfindungsgemäß als Wärmequelle auf eine Übertemperatur von mehr als 200°C geregelt werden. Durch einen geeigneten elektrischen Schaltkreis und eine Kalibrierung kann die Temperatur der Wärmequelle (Tq) genau eingestellt werden. Übliche Wärmeleitfähigkeits-MEMS nach dem Stand der Technik mit durchgehender Siliziumoxidmembran können dagegen durch die thermischen Spannungen bereits ab 180 °C zerstört werden.

Die Membranfläche kann bei erfindungsgemäßen Sensorelementen möglichst klein gehalten werden (0,3 mal 0,3 $mm^2$), um notwendige die Heizleistung zu verringern und um die mechanische Stabilität zu erhöhen.

Der Abstand d von der Wärmequelle auf der Membran 2, 32, 62 zur Wärmesenke (dem Rahmen 3, 33, 63) wird durch den Spalt bestimmt, der gegeben ist durch die Ausnehmungen 4, 34 und eine Unterätzung zwischen der Membran 2, 32, 62 und dem Rahmen 3, 33, 63.

Auf dem Rahmen 3, 33, 63 befinden sich vorzugsweise mindestens zwei zusätzliche elektrische Widerstandselemente 6, 7, 36, 37. Sie können zur Erfassung der Temperatur der Wärmesenke oder als Referenz oder Kompensation verwendet werden.

Die Variante mit einem Referenzwiderstand in Form eines aufgehängten freitragenden Drahtes 37 (Figuren 4 bis 6) ermöglicht eine "echte" Referenz. Dadurch lassen sich Einflüsse wie Druck- oder Durchflussänderungen des fluiden Mediums beziehungsweise des Gases sehr gut kompensieren. Die Referenz hat einen eigenen Fluid-Kanal 54 beziehungsweise Gas-Kanal, so dass die Wärme nicht durch Konvektion oder Strömung von der Wärmequelle zur Referenz gelangt.

Den äußeren Umfang des Rahmens 3, 33, 63 umschließt ein elektrisches Heizelement 10, 40, das bevorzugt einen im Vergleich zu den Leiterbahnen 6, 7, 8, 36, 38 niedrigen elektrischen Widerstand aufweisen kann. Damit wird die Temperatur der Wärmesenke (Ts) des gesamten Rahmens 3, 33, 63 beziehungsweise Chips auf einen gewünschten Wert unter 200°C eingestellt.

Eine Abdeckung 20, 50, 80, die beispielsweise aus Silizium bestehen kann, kann eine Brücke über der Membran 2, 32, 62 bilden und schützt das Sensorelement 1, 31, 61 beziehungsweise den Sensor vor mechanischer Beschädigung sowie vor Staub und Schmutz. Diese Abdeckung definiert wiederum den Abstand d über der Membran 2, 32, 62, was zu einem definierten und reproduzierbaren Messverhalten des Sensors führt. Auf einer Seite der Abdeckung 20, 50, 80 befindet sich ein schmaler Kanal für den Gasaustausch per Diffusion (siehe die Figuren 2 und 5 unten).

Das Chipdesign des Sensorelements 1, 31, 61 können zudem Merkmale kennzeichnen, die die Wärmeleitfähigkeitsmessung besonders robust und für den Einsatz in rauen und explosiven Umgebungen geeignet machen. Dazu gehören die folgenden erfindungsgemäßen Weiterbildungen:
Alle elektrischen Kontaktfelder 10, 12, 14, 16, 18, 40, 42, 44, 46, 48, 78 befinden sich auf der gegenüberliegenden Seite der Öffnung in der Abdeckung 20, 50, 80 für den Gasaustausch. Auf diese Weise können die Kontaktfelder 10, 12, 14, 16, 18, 40, 42, 44, 46, 48, 78 vergossen werden, so dass sie in korrosiven Umgebungen geschützt sind.

Die Membran 2, 32, 62 ist sehr empfindlich gegenüber jeder Form von Kondensat und wird im Falle einer Kontamination sehr schnell und sehr leicht zerstört. Der einzige Weg zur Membran 2, 32, 62 führt daher vorzugsweise durch einen Kanal in der Abdeckung 20, 50, 80. Die Kanalöffnung kann mit bis zu 0,3 mal 0,25 mm$^2$ sehr klein gewählt werden und behindert aufgrund der Oberflächenspannung zwischen der Flüssigkeit und den Sensorwänden den Zugang zur Membran 2, 32, 62. Außerdem kann sich quer zu diesem Kanal auf dem festen Rahmen 3, 33, 63 ein Heizelement 10, 40 oder ein Abschnitt des Heizelements 10, 40 mit der Temperatur Ts befinden. Dieses Heizelement 10, 40 oder der Abschnitt des Heizelements 10, 40 bewirkt, dass die meisten Flüssigkeiten, einschließlich Wasser, in die Gasphase übergehen und im kleinen Kanal (Messkammer) ein Überdruck entsteht, der die Flüssigkeit weiter aus der Kanalöffnung verdrängt.

Der erfindungsgemäße Aufbau ermöglicht eine kleine Chipgröße (bis zu 2 mal 2 mal 1 mm$^3$ oder sogar etwas kleiner) des Sensorelements 1, 31, 61. Dies und die Integration aller Heizelemente 6, 7, 8, 10, 36, 40 innerhalb des Sensorelements 1, 31, 61 reduzieren sehr stark Oberflächentemperatur sowie Heizleistung des Messsystems. Diese zwei Parameter spielen beim Einsatz in explosionsgefährdeten Bereichen und bei der Messung explosiver Gase wie Wasserstoffgas in Luft oder Sauerstoff eine wichtige Rolle.

Weitere Einsatzgebiete für erfindungsgemäße Sensorelemente sind die Messung von Helium-Luft-Wassergas-Gemischen zur Überwachung von Leckagen und Exploration, die Messung von Wasserstoff-Kohlenmonoxid-Wassergas-Gemischen als Synthesegas und die Messung von Kohlenwasserstoff-Kohlenmonoxid-Wassergas-Gemischen zur Überwachung verschiedener Methan-Reformierungsverfahren.

Bei einem erfindungsgemäßen Aufbau können die Kontaktfelder 10, 12, 14, 16, 18, 40, 42, 44, 46, 48, 78 und die Öffnung des Messkammer (siehe Figuren 2 und 5 unten), beziehungsweise das Fluid-Volumen 22, 52, 54, 82 beziehungsweise Gas-Volumen darinnen, durch die Abdeckung 20, 50, 80 räumlich voneinander getrennt sein. Das ermöglicht die Kontaktfelder 10, 12, 14, 16, 18, 40, 42, 44, 46, 48, 78 mit beständigem Material zu vergießen, ohne die Öffnung der Messkammer zu verschließen. Dieser Aufbau ermöglicht es, beim Einbau des Sensors, beziehungsweise des Sensorelements 1, 31, 61, in ein Gehäuse 89, 90, 91 bündig einen Gas-Kanal zu schließen und damit das Totvolumen am Sensor sehr stark zu reduzieren. Die bündige Anbindung ermöglicht es, ohne Zwischenräume einen Filter 88, 98, insbesondere einen Sintermetallfilter, zum Schutz vor Durchfluss, Explosion und Staub einzusetzen. Das Totvolumen ist der Raum zwischen dem Sensorelement und der notwendige Abstand zu den umliegenden Komponenten wie dem Filter 88, 98. Bei dem erfindungsgemäßen Aufbau ist kein Abstand zu dem Filter 88, 98 nötig (siehe Figuren 7 bis 9). Das Totvolumen begrenzt sich vorliegend nur auf das innere Volumen zwischen dem Rahmen 3, 33, 63 und der Auflagefläche. Die Abdeckung 20, 50, 80 ist bündig mit dem Rahmen 3, 33, 63, so dass sie zusammen eine bündige Fläche bilden.

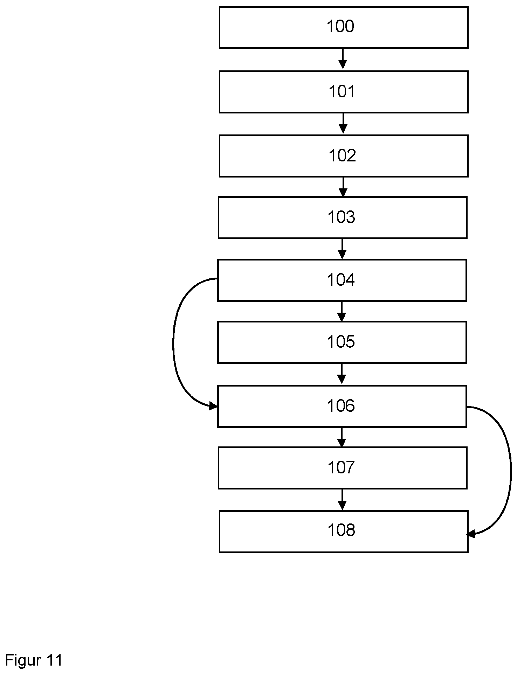

Im Folgenden wird ein beispielhaftes Verfahren anhand der mit den Figuren 1 bis 6 gezeigten Sensorelemente 1, 31 erläutert. Der Ablauf des beispielhaften Verfahrens ist in Figur 11 schematisch dargestellt.

In einem ersten Arbeitsschritt 100 wird die Membran 2, 32 mit Hilfe der elektrischen Widerstandsheizung auf eine erste Temperatur geheizt, bevorzugt auf eine Temperatur oberhalb 200 °C geheizt. Gleichzeitig wird der Rahmen 3, 33 wird mit Hilfe des zumindest einen elektrischen Widerstandselements 6, 7, 36 und gegebenenfalls mit dem elektrischen Heizelement 10, 40 auf dem Rahmen 3, 33 auf eine zweite Temperatur geheizt, wobei die zweite Temperatur mindestens 1 °C niedriger ist als die erste Temperatur. Bevorzugt liegt die zweite Temperatur unterhalb von 200 °C.

In einem zweiten Arbeitsschritt 101 erfolgt das Einspeisen eines zu messenden fluiden Mediums in das Fluid-Volumen 22, 52, das die Membran 2, 32 beidseitig umgibt. Hierzu kann das fluide Medium zuvor einen Filter 88, 98 passieren. Insbesondere kann das fluide Medium ein Gasgemisch sein, das durch Diffusion durch einen Sintermetallfilter bis zu dem die Membran 2, 32 umgebenden Gas-Volumen gelangt.

Ferner wird in einem dritten Arbeitsschritt 102 Wärmeenergie von der Membran 2, 32 und von der elektrischen Heizelement 8, 38 auf das umgebende fluide Medium übertragen.

In einem vierten Arbeitsschritt 103 wird die von dem fluiden Medium aufgenommene Wärmeenergie an den Rahmen 3, 33 abgegeben.

In einem fünften Arbeitsschritt 104 erfolgt eine Messung der Temperatur der Membran 2, 32 durch eine Bestimmung des elektrischen Widerstands des elektrischen Heizelements 8, 38 auf der Membran 2, 32. Gleichzeitig wird die Temperatur des Rahmens 3, 33 über eine Messung des elektrischen Widerstands des zumindest einen elektrischen Widerstandselements 6, 7, 36 bestimmt.

In einem optionalen sechsten Arbeitsschritt 105 wird eine Referenzmessung durchgeführt, wobei die Temperatur des elektrisch geheizten freitragenden Drahts 37 durch die an dem freitragenden Draht 37 abfallende elektrische Spannung bestimmt wird, während das gleiche fluide Medium den freitragenden Draht 37 umgibt und dabei Wärmeenergie von dem freitragenden Draht 37 auf den Rahmen 33 durch Wärmeleitung überträgt. Bevorzugt befindet sich der freitragende Draht 37 in einem von dem die Membran 32 umgebenden Fluid-Volumen 52 getrennten Fluid-Volumen 54.

In einem siebten Arbeitsschritt 106 wird die Temperatur der Membran 2, 32 durch eine Regelung der elektrischen Leistung zum Heizen der elektronischen Heizelement 8, 38 auf der Membran 2, 32 gesteuert oder geregelt. Dabei kann bevorzugt eine selbstregelnde Wheatstone'sche Brückenschaltung verwendet werden.

In einem optionalen achten Arbeitsschritt 107 wird die Temperatur des Rahmens 3, 33 durch eine Regelung der elektrischen Leistung zum Heizen des zumindest einen elektrischen Widerstandselements 6, 7, 36 und/oder des elektrischen Heizelements 10, 40 auf dem Rahmen 3, 33 gesteuert oder geregelt. Dabei kann bevorzugt eine selbstregelnde Wheatstone'sche Brückenschaltung verwendet werden.

In einem nachfolgenden neunten Arbeitsschritt 108 erfolgt eine Bestimmung der thermischen Eigenschaft des fluiden Mediums, insbesondere der thermischen Wärmeleitfähigkeit und/oder des Wasserstoff-Gehalts, des Kohlenwasserstoffgas-Gehalts oder des Heliumgehalts des fluiden Mediums, durch die zum Regeln der Temperatur der Membran 2, 32 notwendige elektrische Leistung und durch die bekannte Temperaturdifferenz zwischen der Membran 2, 32 und dem Rahmen 3, 33. Sofern zuvor der optionale sechste Arbeitsschritt 105 durchgeführt wurde, kann bei der Bestimmung der thermischen Eigenschaft des fluiden Mediums eine Korrektur basierend auf der Referenzmessung am freitragenden Draht 37 vorgenommen werden. Dadurch lassen sich Einflüsse wie Druckänderungen oder Durchflussänderungen des zu messenden fluiden Mediums sehr gut kompensieren.

Die in der voranstehenden Beschreibung, sowie den Ansprüchen, Figuren und Ausführungsbeispielen offenbarten Merkmale der Erfindung können sowohl einzeln als auch in jeder beliebigen Kombination für die Verwirklichung der Erfindung in ihren verschiedenen Ausführungsformen wesentlich sein.

**Bezugszeichenliste**

| | |
|---|---|
| 1, 31, 61 | Sensorelement |
| 2, 32, 62 | Membran |
| 3, 33, 63 | Rahmen / Chip |
| 4, 34 | Ausnehmung |
| 5, 35 | Steg |
| 6, 36 | Elektrisches Widerstandselement / Leiterbahn |
| 7 | Elektrisches Widerstandselement / Leiterbahn |
| 8, 38 | Elektrisches Heizelement / Leiterbahn |
| 9, 39 | Anschlussleiterbahn |
| 10, 40 | Elektrisches Heizelement / Äußere Leiterbahn |
| 12, 42 | Kontaktfeld |
| 14, 44 | Kontaktfeld |
| 16, 46 | Kontaktfeld |
| 18, 48, 78 | Kontaktfeld |
| 20, 50, 80 | Abdeckung |
| 22, 52, 82 | Fluid-Volumen / Gas-Volumen |
| 37 | Freitragender Draht |
| 41 | Anschlussleiterbahn |

| | |
|---|---|
| 43 | Ausnehmung |
| 54 | Fluid-Volumen / Gas-Volumen |
| 85 | Platine |
| 86 | Leiterbahn |
| 87 | Kontaktpad |
| 88, 98 | Filter |
| 89 | Gehäuse |
| 90 | Konus |
| 91 | Gehäuse |
| 92 | Nut |
| 93, 94, 95, 96 | Gaseintrittsöffnung |
| 100 | Arbeitsschritt: Heizen von Membran und Rahmen auf unterschiedliche Temperaturen |
| 101 | Arbeitsschritt: Einspeisen des fluiden Mediums zur Membran |
| 102 | Arbeitsschritt: Übertragen von Wärmeenergie von der Membran auf das fluide Medium |
| 103 | Arbeitsschritt: Übertragen von Wärmeenergie von dem fluiden Medium auf den Rahmen |
| 104 | Arbeitsschritt: Messen der Temperatur der Membran und des Rahmens |
| 105 | optionaler Arbeitsschritt: Durchführen einer Referenzmessung an freitragendem Draht |
| 106 | Arbeitsschritt: Regeln der Temperatur der Membran mittels der elektrischen Leistung |
| 107 | optionaler Arbeitsschritt: Regeln der Temperatur des Rahmens |
| 108 | Arbeitsschritt: Bestimmen der thermischen Eigenschaft des fluiden Mediums anhand der elektrischen Leistung zum Heizen der Membran und der Temperaturdifferenz zwischen der Membran und dem Rahmen bei bekannter Geometrie |
| A | Schnittebene |
| B | Schnittebene |

**Patentansprüche**

1.  Sensorelement (1, 31, 61) zur Messung von thermischen Eigenschaften eines fluiden Mediums, insbesondere zur Messung der Wärmeleitfähigkeit und/oder des Wasserstoffgasgehalts, des Kohlenwasserstoff-Gasgehalts oder des Heliumgehalts des fluiden Mediums, das Sensorelement (1, 31, 61) aufweisend eine Membran (2, 32, 62), eine Abdeckung (20, 50, 80) und einen Rahmen (3, 33, 63), wobei die Abdeckung (20, 50, 80) bündig mit dem Rahmen abschließt, so dass sie eine bündige Fläche bilden, wobei der Rahmen (3, 33, 63) die Membran (2, 32, 62) auf zumindest zwei Seiten umgibt, wobei die Membran (2, 32, 62) von dem Rahmen (3, 33, 63) durch Ausnehmungen (4, 34) bereichsweise getrennt ist, wobei die Membran (2, 32, 62) freitragend ist und über Stege (5, 35) mit dem Rahmen (3, 33, 63) verbunden ist, wobei der Rahmen (3, 33, 63) die Membran (2, 32, 62) über die Stege (5, 35) trägt, das Sensorelement (1, 31, 61) ferner aufweisend zumindest ein elektrisches Widerstandselement (6, 7, 36) in Form zumindest einer Leiterbahn auf dem Rahmen (3, 33, 63) und ein elektrisches Heizelement (8, 38) auf der Membran (2, 32, 62) in Form einer Leiterbahn auf der Membran (2, 32, 62), wobei das elektrische Heizelement (8, 38) über Anschlussleiterbahnen (9, 39) elektrisch kontaktiert ist, wobei die Anschlussleiterbahnen (9, 39) vom Rahmen (3, 33, 63) über zumindest einen der Stege (5, 35) bis auf die Membran (2, 32, 62) verlaufen, wobei der Rahmen (3, 33, 63) ein elektrisches Heizelement (10, 40) in Form einer äußeren Leiterbahn auf dem Rahmen (3, 33, 63) aufweist, wobei das elektrische Heizelement (10, 40) des Rahmens (3, 33, 63) das zumindest eine elektrische Widerstandselement (6, 7, 36) auf dem Rahmen (3, 33, 63) an zumindest zwei Seiten oder an zumindest drei Seiten außen umrahmt.

2. Sensorelement (1, 31, 61) nach Anspruch 1, **dadurch gekennzeichnet, dass** die Membran (2, 32, 62) mit dem elektrischen Heizelement (8, 38) heizbar ist und die Temperatur der Membran (2, 32, 62) über den elektrischen Widerstand des elektrischen Heizelements (8, 38) einstellbar ist, wobei bevorzugt das Sensorelement (1, 31, 61) eine einstellbare Heizeinrichtung zum Heizen des elektrischen Heizelements (8, 38) und eine Membran-Temperatureinstelleinrichtung zum Einstellen der Temperatur der Membran (2, 32, 62) aufweist, wobei die Membran- Temperatureinstelleinrichtung zur Bestimmung des elektrischen Widerstands des elektrischen Heizelements (8, 38) eingerichtet ist.

3. Sensorelement (1, 31, 61) nach Anspruch 1 oder 2, **dadurch gekennzeichnet, dass** die Temperatur des Rahmens (3, 33, 63) mit dem zumindest einen elektrischen Widerstandselement (6, 7, 36) messbar ist, wobei bevorzugt das Sensorelement (1, 31, 61) eine Rahmen-Temperaturmesseinrichtung zur Messung der Temperatur des Rahmens (3, 33, 63) aufweist, wobei besonders bevorzugt die Rahmen-Temperaturmesseinrichtung zur Bestimmung des elektrischen Widerstands des zumindest einen elektrischen Widerstandselements (6, 7, 36) eingerichtet ist.

4. Sensorelement (1, 31, 61) nach einem der vorangehenden Ansprüche, **dadurch gekennzeichnet, dass** die Membran (2, 32, 62) und der Rahmen (3, 33, 63) unabhängig voneinander heizbar sind.

5. Sensorelement (1, 31, 61) nach einem der vorangehenden Ansprüche, **dadurch gekennzeichnet,** **dass** die Stege (5, 35) und die Membran (2, 32, 62) aus dem gleichen Material bestehen und einteilig ausgeführt sind, wobei bevorzugt die Membran (2, 32, 62) und die Stege (5, 35) aus Siliziumnitrid oder Siliziumoxid bestehen.

6. Sensorelement (1, 31, 61) nach einem der vorangehenden Ansprüche, **dadurch gekennzeichnet,** **dass** der Rahmen (3, 33, 63) aus Silizium oder aus einer Keramik besteht, insbesondere aus Silizium oder aus einer Aluminiumoxid-Keramik besteht.

7. Sensorelement (1, 31, 61) nach einem der vorangehenden Ansprüche, **dadurch gekennzeichnet,** **dass** das zumindest eine elektrische Widerstandselement (6, 7, 36) durch zumindest eine metallische Leiterbahn auf dem Rahmen (3, 33, 63) realisiert ist, wobei bevorzugt die zumindest eine metallische Leiterbahn aus einem Metall oder einer Metalllegierung mit einem Temperaturkoeffizient des elektrischen Widerstands von zumindest 3 10-3 1/K oder aus Nickel besteht, und/oder das elektrische Heizelement (8, 38) durch eine metallische Leiterbahn auf der Membran (2, 32, 62) realisiert ist, wobei bevorzugt die metallische Leiterbahn aus einem Metall oder einer Metalllegierung mit einem Temperaturkoeffizient von zumindest 3 10-3 1/K oder aus Nickel besteht.

8. Sensorelement (1, 31, 61) nach einem der vorangehenden Ansprüche, **dadurch gekennzeichnet,** **dass** die Membran (2, 32, 62) nicht in einem Randbereich des Sensorelements (1, 31, 61) angeordnet ist und allseitig von dem Rahmen (3, 33, 63) umgeben ist, bevorzugt die Membran (2, 32, 62) in einem mittleren Bereich des Sensorelements (1, 31, 61) angeordnet ist.

9. Sensorelement (1, 31, 61) nach einem der vorangehenden Ansprüche, **dadurch gekennzeichnet,** **dass** die Abdeckung (20, 50, 80) ein mit der Umgebung gasdurchlässiges verbundenes Gas-Volumen um die Membran (2, 32, 62) herum begrenzt.

10. Sensorelement (1, 31, 61) nach einem der vorangehenden Ansprüche, **dadurch gekennzeichnet,** **dass** das Sensorelement (1, 61) zwei elektrische Widerstandselemente (6, 7) in Form von zwei Leiterbahnen als das zumindest eine elektrische Widerstandselement (6, 7) auf dem Rahmen (3, 63) aufweist, wobei bevorzugt die zwei elektrischen Widerstandselemente (6, 7) die Membran (2, 62) auf zwei einander gegenüberliegenden Seiten umgeben, so dass die Membran (2, 62) zwischen den zwei elektrischen Widerstandselementen (6, 7) angeordnet ist.

**11.** Sensorelement (1, 31, 61) nach einem der vorangehenden Ansprüche, **dadurch gekennzeichnet, dass** das Sensorelement (31, 61) einen freitragenden Draht (37) als Referenzwiderstand aufweist, wobei der freitragende Draht (37) an zwei Enden mit dem Rahmen (3, 33, 63) verbunden und am Rahmen (33, 63) aufgehängt ist und durch Ausnehmungen (43) bereichsweise räumlich von dem Rahmen (33, 63) getrennt ist, wobei bevorzugt der freitragende Draht (37) von der Abdeckung (50, 80) umgeben ist, die mit dem Rahmen (33, 63) fest verbunden ist, wobei die Abdeckung (50, 80) zumindest bereichsweise räumlich von dem freitragenden Draht (37) beabstandet ist, wobei besonders bevorzugt die Abdeckung (50, 80) zumindest bereichsweise als gasdurchlässiger Filter (88, 98) aufgebaut ist.

**12.** Sensorelement (1, 31, 61) nach einem der vorangehenden Ansprüche, **dadurch gekennzeichnet, dass** die Membran (2, 32, 62) auf zumindest zwei Seiten zum Rahmen (3, 33, 63) und oberhalb und unterhalb der Membran (2, 32, 62) von der Abdeckung (20, 50, 80) umgeben ist, wobei bevorzugt die Abdeckung (20, 50, 80) zumindest bereichsweise als gasdurchlässiger Filter (88, 98) aufgebaut ist und/oder zumindest bereichsweise aus Silizium besteht.

**13.** Sensorelement (1, 31, 61) nach einem der vorangehenden Ansprüche, **dadurch gekennzeichnet, dass** die äußere Leiterbahn des elektrischen Heizelements (10, 40) auf dem Rahmen (3, 33, 63) breiter ist als die Leiterbahnen des zumindest einen elektrischen Widerstandselements (6, 7, 36) auf dem Rahmen (3, 33, 63) und des elektrischen Heizelements (8, 38) auf der Membran (2, 32, 62).

**14.** Sensorelement (1, 31, 61) nach Anspruch 13, **dadurch gekennzeichnet, dass** ein freiliegender Teil der äußeren Leiterbahn des elektrischen Heizelements (10, 40) des Rahmens (3, 33, 63) in einem Fluidkanal verläuft, der zu einem die Membran (2, 32, 62) umgebenden Fluid-Volumen (22, 52, 82) führt, wobei bevorzugt der freiliegende Teil der äußeren Leiterbahn quer zu dem Fluidkanal verläuft und/oder der Fluidkanal in der Abdeckung (20, 50, 80) ausgeformt ist, die die Membran (2, 32, 62) umschließt, wobei die Abdeckung (20, 50, 80) die anderen Bereiche der äußeren Leiterbahn abdecken.

**15.** Sensorelement (1, 31, 61) nach einem der vorangehenden Ansprüche, **dadurch gekennzeichnet, dass** das zumindest eine elektrische Widerstandselement (6, 7, 36) auf dem Rahmen (3, 33, 63) und das elektrische Heizelement (8, 38) auf der Membran (2, 32, 62), und sofern vorhanden auch das elektrische Heizelement (8, 38) des Rahmens (3, 33, 63), über Kontaktfelder (12, 14, 16, 18, 42, 44, 46, 48, 78) auf dem Rahmen (3, 33, 63) elektrisch kontaktiert sind, wobei bevorzugt die Kontaktfelder (12, 14, 16, 18, 42, 44, 46, 48, 78) durch verbreiterte Bereiche der Leiterbahnen ausgeführt sind und/oder die Kontaktfelder (12, 14, 16, 18, 42, 44, 46, 48, 78) alle auf einer Seite des Rahmens (3, 33, 63) angeordnet sind.

**16.** Sensorelement (1, 31, 61) nach einem der vorangehenden Ansprüche, **dadurch gekennzeichnet, dass** die Membran (2, 32, 62) eine Fläche von maximal 20 mm$^2$ hat, bevorzugt eine Fläche von maximal 1 mm$^2$ hat, besonders bevorzugt eine Fläche von maximal 0,5 mm$^2$ hat, ganz besonders bevorzugt eine Fläche von maximal 0,1 mm$^2$ hat.

**17.** Sensorelement (1, 31, 61) nach einem der vorangehenden Ansprüche, **dadurch gekennzeichnet, dass** der Rahmen (3, 33, 63) mit der Membran (2, 32, 62) in der Ebene der Membran (2, 32, 62) einen äußeren Durchmesser von maximal 10 mm hat, bevorzugt einen äußeren Durchmesser von maximal 3 mm hat, besonders bevorzugt einen äußeren Durchmesser von maximal 2 mm hat.

**18.** Sensorelement (1, 31, 61) nach einem der vorangehenden Ansprüche, **dadurch gekennzeichnet, dass** die Abdeckung (20, 50, 80) beheizbar ist, wobei bevorzugt die Abdeckung (20, 50, 80) mit dem elektrischen Heizelement (10, 40) auf dem Rahmen (3, 33, 63) beheizbar ist und/oder die Abdeckung (20, 50, 80) zumindest eine Gaseintrittsöffnung (93, 94, 95, 96) des Sensorelements (1, 31, 61) definiert und die Leiterbahn des elektrischen Heizelements (10, 40) auf dem Rahmen (3, 33, 63) in der zumindest einen Gaseintrittsöffnung (93, 94, 95, 96) freiliegt.

**19.** Sensor zur Bestimmung von thermischen Eigenschaften eines fluiden Mediums, insbesondere zur Bestimmung der thermischen Leitfähigkeit und/oder des Wasserstoffgas-Gehalts, des Kohlenwasserstoffgas-Gehalts oder des Heliumgehalts eines fluiden Mediums, der Sensor aufweisend ein Sensorelement (1, 31, 61) nach einem der vorgehenden Ansprüche, wobei die Membran (2, 32, 62) mit dem elektrischen Heizelement (8, 38) auf der Membran (2, 32, 62) unabhängig von der Temperatur des Rahmens (3, 33, 63) oder die Membran (2, 32, 62) mit dem elektrischen Heizelement (8, 38) auf der Membran (2, 32, 62) und der Rahmen (3, 33, 63) unabhängig voneinander beheizbar sind, wobei die Temperatur der Membran (2, 32, 62) mit dem elektrischen Heizelement (8, 38) auf der Membran (2, 32, 62) und die Temperatur des Rahmens (3, 33, 63) mit dem zumindest einen elektrischen Widerstandselement (6, 7, 36) messbar sind, wobei die Temperatur der Membran (2, 32, 62) mit dem elektrischen Heizelement (8, 38) auf der Membran (2, 32, 62) und die Temperatur des Rahmens (3, 33, 63) aufgrund der Messung der Temperaturen regelbar sind, wobei die hierfür notwendigen Heizleistungen mit dem Sensor bestimmbar sind, um auf die thermischen Eigenschaften des fluiden Mediums zu schließen, bevorzugt um die Wärmeleitfähigkeit und/oder den Wasserstoffgas-Gehalt, den Kohlenwasserstoffgas-Gehalt oder den Heliumgehalt des fluiden Mediums zu bestimmen.

20. Sensor nach Anspruch 19, **dadurch gekennzeichnet, dass** der Sensor eine Wheatstone'sche Brückenschaltung aufweist, die derart mit dem elektrischen Heizelement (8, 38) auf der Membran (2, 32, 62) verbunden ist, dass die Heiz-leistung der Membran (2, 32, 62) über die Wheatstone'sche Brückenschaltung regelbar ist.

21. Sensor nach Anspruch 19 oder 20, **dadurch gekennzeichnet, dass** die Membran (2, 32, 62) im Betrieb des Sensors auf Temperaturen von mindestens 200 °C heizbar ist und/oder der Rahmen (3, 33, 63) im Betrieb des Sensors auf mindestens 130 °C heizbar ist, wobei bevorzugt die Membran (2, 32, 62) im Betrieb des Sensors auf Temperaturen von mindestens 220 °C heizbar ist und/oder der Rahmen (3, 33, 63) im Betrieb des Sensors auf mindestens 150 °C heizbar ist, wobei besonders bevorzugt der Rahmen (3, 33, 63) im Betrieb des Sensors auf mindestens 180 °C heizbar ist.

22. Verfahren zur Bestimmung mindestens einer thermischen Eigenschaft eines fluiden Mediums, insbesondere der thermischen Wärmeleitfähigkeit und/oder des Wasserstoff-Gehalts, des Kohlenwasserstoffgas-Gehalts oder des Heliumgehalts des fluiden Mediums, das Verfahren aufweisend die Schritte:

    (A) Heizen einer Membran (2, 32, 62) mit einem elektrischen Heizelement (8, 38) in Form einer auf der Membran (2, 32, 62) angeordnete Leiterbahn, wobei die Membran (2, 32, 62) über Stege (5, 35) mit einem Rahmen (3, 33, 63) verbunden ist und von dem Rahmen (3, 33, 63) gehalten wird und wobei die Membran (2, 32, 62) innerhalb einer Abdeckung (20, 50, 80) von einem definierten Volumen (22, 52, 82) des fluiden Mediums umgeben ist, wobei die Abdeckung (20, 50, 80) bündig mit dem Rahmen (3, 33, 63) abschließt, so dass sie eine bündige Fläche bilden;
    B) Übertragen von Wärme von der Membran (2, 32, 62) und dem elektrischen Heizelement (8, 38) auf das die Membran (2, 32, 62) umgebende fluide Medium;
    C) Übertragen von Wärme von dem fluiden Medium auf den Rahmen (3, 33, 63), wobei der Rahmen (3, 33, 63) eine niedrigere Temperatur hat als die Membran (2, 32, 62);
    D) Bestimmen der Temperatur der Membran (2, 32, 62) und des Rahmens (3, 33, 63);
    E) Steuern oder Regeln der Temperatur der Membran (2, 32, 62) durch eine Regelung der elektrischen Leistung zum Heizen der Membran (2, 32, 62); und
    F) Bestimmen der thermischen Eigenschaft des fluiden Mediums, insbesondere der thermischen Wärmeleitfähigkeit und/oder des Wasserstoff-Gehalts, des Kohlenwasserstoffgas-Gehalts oder des Heliumgehalts des fluiden Mediums, durch die zum Regeln der Temperatur der Membran (2, 32, 62) notwendige elektrische Leistung und durch die bekannte Temperaturdifferenz zwischen der Membran (2, 32, 62) und dem Rahmen (3, 33, 63); und
    G) Steuern oder Regeln der Temperatur des Rahmens (3, 33, 63).

23. Verfahren nach Anspruch 22, **gekennzeichnet durch** einen Schritt G):
    **In** Schritt G) das Steuern oder Regeln der Temperatur des Rahmens (3, 33, 63) durch eine Regelung der elektrischen Leistung zum Heizen des Rahmens (3, 33, 63) erfolgt.

24. Verfahren nach Anspruch 22 oder 23, **dadurch gekennzeichnet, dass** die Temperatur der Membran (2, 32, 62) oberhalb von 200 °C gehalten wird und die Temperatur des Rahmens (3, 33, 63) unterhalb von 200 °C gehalten wird.

25. Verfahren nach Anspruch 22 oder 23, **dadurch gekennzeichnet, dass** die Membran (2, 32, 62) und der Rahmen (3, 33, 63) Teil eines Sensors sind, wobei der Sensor eine gleichbleibende und bekannte Geometrie und ein bekanntes Heizverhalten aufweist und wobei der Sensor vor der Messung eingemessen wird, um aus der bekannten Geometrie des Sensors und aus der bekannten oder gemessenen Temperaturdifferenz zwischen der Membran (2, 32, 62) und dem Rahmen (3, 33, 63) und der zur Heizung der Membran (2, 32, 62) notwendigen elektrischen Leistung die thermische Eigenschaft des fluiden Mediums, insbesondere die thermische Wärmeleitfähigkeit und/oder den Wasserstoff-Gehalt, den Kohlenwasserstoffgas-Gehalt oder den Heliumgehalt des fluiden Mediums, zu berechnen.

26. Verfahren nach einem der Ansprüche 22 bis 25, **dadurch gekennzeichnet, dass** das Verfahren mit einem Sensorelement (1, 31, 61) nach einem der Ansprüche 1 bis 17 oder mit einem Sensor nach einem der Ansprüche 18 bis 20 durchgeführt wird.

27. Verfahren nach einem der Ansprüche 22 bis 26, **dadurch gekennzeichnet, dass** die Temperatur der Membran (2, 32, 62) mindestens 5 °C und maximal 200 °C oberhalb der Temperatur des Rahmens (3, 33, 63) gesteuert oder geregelt wird, bevorzugt die Temperatur der Membran (2, 32, 62) mindestens 10 °C und maximal 150 °C oberhalb der Temperatur des Rahmens (3, 33, 63) gesteuert oder geregelt wird, besonders bevorzugt die Temperatur der Membran (2, 32, 62) mindestens 20 °C und maximal 100°C oberhalb der Temperatur des Rahmens (3, 33, 63) gesteuert oder geregelt wird.

28. Verfahren nach einem der Ansprüche 22 bis 27, **dadurch gekennzeichnet, dass** die Temperatur der Membran (2, 32, 62) bei mindestens 201 °C und maximal bei 350 °C gehalten wird, bevorzugt bei mindestens 210 °C und maximal bei 300 °C gehalten wird, besonders bevorzugt bei mindestens 220 °C und maximal bei 260 °C gehalten wird.

29. Verfahren nach einem der Ansprüche 22 bis 28, **dadurch gekennzeichnet, dass** die Temperatur des Rahmens (3, 33, 63) bei mindestens 135 °C und maximal bei 199 °C gehalten wird, bevorzugt bei mindestens 150 °C und maximal bei 195 °C gehalten wird, besonders bevorzugt bei mindestens 180 °C und maximal bei 190 °C gehalten wird.

30. Verfahren nach einem der Ansprüche 22 bis 29, **dadurch gekennzeichnet, dass** die Temperatur der Membran (2, 32, 62) derart gesteuert oder geregelt wird oder die Temperatur der Membran (2, 32, 62) und die Temperatur des Rahmens (3, 33, 63) derart gesteuert oder geregelt werden, dass der Mittelwert der Temperatur des Rahmens (3, 33, 63) und der Temperatur der Membran (2, 32, 62) bei mindestens bei 180 °C und maximal bei 220 °C liegt, bevorzugt bei mindestens 190 °C und maximal bei 210 °C liegt, besonders bevorzugt bei mindestens 195 °C und maximal bei 205 °C liegt.

31. Verfahren nach einem der Ansprüche 22 bis 30, **dadurch gekennzeichnet, dass** eine Temperatur eines separaten Volumens im Bereich des Rahmens (33, 63) mit einem freitragenden Draht (37) gemessen wird, wobei die gemessene Temperatur des freitragenden Drahts (37) zur Korrektur beim Bestimmen der thermischen Eigenschaft des fluiden Mediums, insbesondere der thermischen Wärmeleitfähigkeit und/oder des Wasserstoff-Gehalts, des Kohlenwasserstoffgas-Gehalts oder des Heliumgehalts des fluiden Mediums, in Schritt F) verwendet wird.

32. Verfahren nach einem der Ansprüche 22 bis 31, **dadurch gekennzeichnet, dass** zum Bestimmen der Temperatur der Membran (2, 32, 62) in Schritt D) das gleiche elektrische Heizelement (8, 38) auf der Membran (2, 32, 62) verwendet wird, mit dem die Membran (2, 32, 62) in Schritt A) geheizt wird.

33. Verfahren nach einem der Ansprüche 22 bis 32, **dadurch gekennzeichnet, dass** die Temperatur der Membran (2, 32, 62) durch eine erste selbstregelnde Wheatstone'sche Brückenschaltung konstant gehalten wird, wobei das elektrische Heizelement (8, 38) auf der Membran (2, 32, 62) ein Teil der ersten selbstregelnden Wheatstone'schen Brückenschaltung ist, und/oder die Temperatur des Rahmens (3, 33, 63) durch eine zweite selbstregelnde Wheatstone'sche Brückenschaltung oder durch einen digitalen oder computergesteuerten Regler konstant gehalten wird, wobei bevorzugt zumindest ein elektrisches Widerstandselement (6, 7, 36) auf dem Rahmen (3, 33, 63) und/oder ein elektrisches Heizelement (8, 38) auf dem Rahmen (3, 33, 63) ein Teil der zweiten selbstregelnden Wheatstone'schen Brückenschaltung ist.

34. Verfahren nach einem der Ansprüche 22 bis 33, **dadurch gekennzeichnet, dass** ein Schritt H) erfolgt:
H) Erhöhen oder Steuern oder Regeln der Temperatur des fluiden Mediums im Bereich eines Gaseintritts zur Membran (2, 32, 62) in die Abdeckung (20, 50, 80) und/oder Erhöhen oder Steuern oder Regeln der Temperatur der Abdeckung (20, 50, 80), wobei die Abdeckung (20, 50, 80) ein mit der Umgebung gasdurchlässig verbundenes Gas-Volumen um die Membran (2, 32, 62) begrenzt, bevorzugt durch eine Regelung der elektrischen Leistung zum Heizen des Rahmens (3, 33, 63) oder einer separaten elektrischen Widerstandsheizeinrichtung.

35. Verfahren nach einem der Ansprüche 22 bis 34, **dadurch gekennzeichnet, dass** der Rahmen (3, 33, 63) auf eine Temperatur gesteuert oder geregelt wird, die hoher ist als die Taupunkttemperatur der vorhandenen oder möglichen Kondensation im untersuchten Gas.

**Claims**

1. A sensor element (1, 31, 61) for measuring thermal properties of a fluid medium, in particular for measuring the thermal conductivity and/or the hydrogen gas content, the hydrocarbon gas content or the helium content of the fluid medium, wherein the sensor element (1, 31, 61) has a membrane (2, 32, 62), a cover (20, 50, 80) and a frame (3, 33, 63), wherein the cover (20, 50, 80) is flush with the frame such that they form a flush surface, wherein the frame (3, 33, 63) surrounds the membrane (2, 32, 62) on at least two sides, wherein the membrane (2, 32, 62) is partially separated from the frame (3, 33, 63) by recesses (4, 34), wherein the membrane (2, 32, 62) is self-supporting and is connected to the frame (3, 33, 63) via webs (5, 35), wherein the frame (3, 33, 63) supports the membrane (2, 32, 62) via the webs (5, 35), the sensor element (1, 31, 61), further having at least one electrical resistance element (6, 7, 36) in the form of at least one conductor path on the frame (3, 33, 63) and an electrical heating element (8, 38) on the membrane (2, 32, 62) in the form of a conductor path on the membrane (2, 32, 62), wherein the electrical heating element (8, 38) is electrically contacted via connecting conductor paths (9, 39), wherein the connecting conductor paths (9, 39) run from the frame (3, 33, 63) via at least one of the webs (5, 35) to the membrane (2, 32, 62), wherein the frame (3, 33, 63) has an electrical heating element (10, 40) in the form of an outer conductor path on the frame (3, 33, 63), wherein the electrical heating element (10, 40) of the frame (3, 33, 63) externally frames the at least one electrical resistance element (6, 7, 36) on the frame (3, 33, 63) on at least two sides or on at least three sides.

2. **The** sensor element (1, 31, 61) according to claim 1, **characterized in that** the membrane (2, 32, 62) can be heated with the electrical heating element (8, 38) and the temperature of the membrane (2, 32, 62) can be adjusted via the electrical resistance of the electrical heating element (8, 38), wherein preferably the sensor element (1, 31, 61) has an adjustable heating apparatus for heating the electrical heating element (8, 38) and a membrane temperature adjustment apparatus for adjusting the temperature of the membrane (2, 32, 62), wherein the membrane temperature adjustment apparatus is arranged to determine the electrical resistance of the electrical heating element (8, 38).

3. The sensor element (1, 31, 61) according to claim 1 or 2, **characterized in that** the temperature of the frame (3, 33, 63) can be measured with the at least one electrical resistance element (6, 7, 36), wherein the sensor element (1, 31, 61) preferably has a frame temperature measuring apparatus for measuring the temperature of the frame (3, 33, 63), wherein the frame temperature measuring apparatus is most preferably arranged to determine the electrical resistance of the at least one electrical resistance element (6, 7, 36).

4. The sensor element (1, 31, 61) according to any one of the preceding claims, **characterized in that** the membrane (2, 32, 62) and the frame (3, 33, 63) can be heated independently of one another.

5. The sensor element (1, 31, 61) according to any one of the preceding claims, **characterized in that** the webs (5, 35) and the membrane (2, 32, 62) consist of the same material and are designed in one piece, wherein preferably the membrane (2, 32, 62) and the webs (5, 35) consist of silicon nitride or silicon oxide.

6. The sensor element (1, 31, 61) according to any one of the preceding claims, **characterized in that** the frame (3, 33, 63) consists of silicon or of a ceramic, in particular of silicon or of an aluminium oxide ceramic.

7. The sensor element (1, 31, 61) according to any one of the preceding claims, **characterized in that** the at least one electrical resistance element (6, 7, 36) is realized by at least one metallic conductor path on the frame (3, 33, 63), wherein preferably the at least one metallic conductor path consists of a metal or a metal alloy with a temperature coefficient of electrical resistance of at least 3 10-3 1/K or of nickel, and /or the electrical heating element (8, 38) is realized by a metallic conductor path on the membrane (2, 32, 62), wherein the metallic conductor path preferably consists of a metal or a metal alloy with a temperature coefficient of at least 3 10-3 1/K or of nickel.

8. The sensor element (1, 31, 61) according to any one of the preceding claims, **characterized in that** the membrane (2, 32, 62) is not arranged in an edge region of the sensor element (1, 31, 61) and is surrounded on all sides by the frame (3, 33, 63), preferably the membrane (2, 32, 62) is arranged in a central region of the sensor element (1, 31, 61).

9. The sensor element (1, 31, 61) according to any one of the preceding claims, **characterized in that** the cover (20, 50, 80) delimits a gas volume around the membrane (2, 32, 62) that is connected to the environment and is gas-permeable.

10. The sensor element (1, 31, 61) according to any one of the preceding claims, **characterized in that** the sensor element (1, 61) has two electrical resistance elements (6, 7) in the form of two conductor paths as the at least one electrical resistance element (6, 7) on the frame (3, 63), wherein preferably the two electrical resistance elements (6, 7) surround the membrane (2, 62) on two opposite sides, such that the membrane (2, 62) is arranged between the two electrical resistance elements (6, 7).

11. The sensor element (1, 31, 61) according to any one of the preceding claims, **characterized in that** the sensor element (31, 61) has a self-supporting wire (37) as a reference resistor, wherein the self-supporting wire (37) is connected at two ends to the frame (3, 33, 63) and suspended from the frame (33, 63) and is spatially separated from the frame (33, 63) in some areas by recesses (43), wherein preferably the self-supporting wire (37) is surrounded by the cover (50, 80) which is fixedly connected to the frame (33, 63), wherein the cover (50, 80) is at least partially spatially spaced from the self-supporting wire (37), wherein most preferably the cover (50, 80) is at least partially constructed as a gas-permeable filter (88, 98).

12. The sensor element (1, 31, 61) according to any one of the preceding claims, **characterized in that** the membrane (2, 32, 62) is surrounded by the cover (20, 50, 80) on at least two sides to the frame (3, 33, 63) and above and below the membrane (2, 32, 62), wherein the cover (20, 50, 80) is preferably constructed at least in regions as a gas-permeable filter (88, 98) and/or consists at least in regions of silicon.

13. The sensor element (1, 31, 61) according to any one of the preceding claims, **characterized in that** the outer conductor path of the electrical heating element (10, 40) on the frame (3, 33, 63) is wider than the conductor paths of the at least one electrical resistance element (6, 7, 36) on the frame (3, 33, 63) and of the electrical heating element (8, 38) on the membrane (2, 32, 62).

14. The sensor element (1, 31, 61) according to claim 13, **characterized in that** an exposed part of the outer conductor path of the electrical heating element (10, 40) of the frame (3, 33, 63) runs in a fluid channel which leads to a fluid volume (22, 52, 82) surrounding the membrane (2, 32, 62), wherein preferably the exposed part of the outer conductor path runs transversely to the fluid channel and/or the fluid channel is formed in the cover (20, 50, 80) which encloses the membrane (2, 32, 62), wherein the cover (20, 50, 80) covers the other regions of the outer conductor path.

15. The sensor element (1, 31, 61) according to any one of the preceding claims, **characterized in that** the at least one electrical resistance element (6, 7, 36) on the frame (3, 33, 63) and the electrical heating element (8, 38) on the membrane (2, 32, 62), and if present also the electrical heating element (8, 38) of the frame (3, 33, 63), are electrically contacted via contact fields (12, 14, 16, 18, 42, 44, 46, 48, 78) on the frame (3, 33, 63), wherein preferably the contact fields (12, 14, 16, 18, 42, 44, 46, 48, 78) are formed by widened regions of the conductor paths and/or the contact fields (12, 14, 16, 18, 42, 44, 46, 48, 78) are all arranged on one side of the frame (3, 33, 63).

16. The sensor element (1, 31, 61) according to any one of the preceding claims, **characterized in that** the membrane (2, 32, 62) has an area of at most 20 mm$^2$, preferably has an area of at most 1 mm$^2$, most preferably has an area of at most 0.5 mm$^2$, especially most preferably has an area of at most 0.1 mm$^2$.

17. The sensor element (1, 31, 61) according to any one of the preceding claims, **characterized in that** the frame (3, 33, 63) with the membrane (2, 32, 62) in the plane of the membrane (2, 32, 62) has an outer diameter of a maximum of 10 mm, preferably has an outer diameter of a maximum of 3 mm, most preferably has an outer diameter of a maximum of 2 mm.

18. The sensor element (1, 31, 61) according to any one of the preceding claims, **characterized in that** the cover (20, 50, 80) is heatable, wherein preferably the cover (20, 50, 80) is heatable with the electrical heating element (10, 40) on the frame (3, 33, 63) and/or the cover (20, 50, 80) defines at least one gas inlet opening (93, 94, 95, 96) of the sensor element (1, 31, 61) and the conductor path of the electrical heating element (10, 40) on the frame (3, 33, 63) is exposed in the at least one gas inlet opening (93, 94, 95, 96).

19. Sensor for determining thermal properties of a fluid medium, in particular for determining the thermal conductivity and/or the hydrogen gas content, the hydrocarbon gas content or the helium content of a fluid medium, wherein the sensor has a sensor element (1, 31, 61) according to any one of the preceding claims, wherein the membrane (2, 32, 62) with the electric heating element (8, 38) on the membrane (2, 32, 62) can be heated independently of the temperature of the frame (3, 33, 63) or the membrane (2, 32, 62) with the electric heating element (8, 38) on the membrane (2, 32, 62) and the frame (3, 33, 63) can be heated independently of one another, wherein the temperature of the membrane (2, 32, 62) is measurable with the electrical heating element (8, 38) on the membrane (2, 32, 62) and the temperature of the frame (3, 33, 63) is measurable with the at least one electrical resistance element (6, 7, 36), wherein the temperature of the membrane (2, 32, 62) is measurable with the electrical heating element (8, 38) on the membrane (2, 32, 62) and the temperature of the frame (3, 33, 63) are controllable based on the measurement of the temperatures, wherein the heating powers required for this purpose can be determined with the sensor in order to draw conclusions about the thermal properties of the fluid medium, preferably in order to determine the thermal conductivity and/or the hydrogen gas content, the hydrocarbon gas content or the helium content of the fluid medium.

20. The sensor according to claim 19, **characterized in that** the sensor has a Wheatstone bridge circuit which is connected to the electrical heating element (8, 38) on the membrane (2, 32, 62) in such a way that the heating power of the membrane (2, 32, 62) can be regulated via the Wheatstone bridge circuit.

21. The sensor according to claim 19 or 20, **characterized in that** the membrane (2, 32, 62) can be heated to temperatures of at least 200 °C during operation of the sensor and/or the frame (3, 33, 63) can be heated to at least 130 °C during operation of the sensor, wherein preferably the membrane (2, 32, 62) can be heated to temperatures of at least 220 °C during operation of the sensor and/or the frame (3, 33, 63) can be heated to at least 150 °C during operation of the sensor, wherein most preferably the frame (3, 33, 63) can be heated to at least 180 °C during operation of the sensor.

22. Method for determining at least one thermal property of a fluid medium, in particular the thermal conductivity and/or the hydrogen content, the hydrocarbon gas content or the helium content of the fluid medium, wherein the method has the following steps:

A) heating a membrane (2, 32, 62) with an electrical heating element (8, 38) in the form of a conductor path, arranged on the membrane (2, 32, 62), wherein the membrane (2, 32, 62) is connected to a frame (3, 33, 63) via webs (5, 35) and is held by the frame (3, 33, 63) and wherein the membrane (2, 32, 62) is surrounded by a defined volume (22, 52, 82) of the fluid medium within a cover (20, 50, 80), the cover (20, 50, 80) being flush with the frame (3, 33, 63) such that they form a flush surface;
B) transferring heat from the membrane (2, 32, 62) and the electrical heating element (8, 38) to the fluid medium surrounding the membrane (2, 32, 62);
C) transferring heat from the fluid medium to the frame (3, 33, 63), wherein the frame (3, 33, 63) has a lower temperature than the membrane (2, 32, 62);
D) determining the temperature of the membrane (2, 32, 62) and the frame (3, 33, 63);
E) controlling or regulating the temperature of the membrane (2, 32, 62) by regulating the electrical power for heating the membrane (2, 32, 62); and
F) determining the thermal property of the fluid medium, in particular the thermal conductivity and/or the hydrogen content, the hydrocarbon gas content or the helium content of the fluid medium, by the electrical power required to regulate the temperature of the membrane (2, 32, 62) and by the known temperature difference between the membrane (2, 32, 62) and the frame (3, 33, 63); and
G) controlling or regulating the temperature of the frame (3, 33, 63).

23. The method according to claim 22, **characterized by** a step G):

in step G), the temperature of the frame (3, 33, 63) is controlled or regulated by regulating the electrical power for heating the frame (3, 33, 63).

24. The method according to claim 22 or 23, **characterized in that** the temperature of the membrane (2, 32, 62) is kept above 200 °C and the temperature of the frame (3, 33, 63) is kept below 200 °C.

25. The method according to claim 22 or 23, **characterized in that** the membrane (2, 32, 62) and the frame (3, 33, 63) are part of a sensor, wherein the sensor has a constant and known geometry and a known heating behaviour and wherein the sensor is calibrated before the measurement, to calculate the thermal properties of the fluid medium from the known geometry of the sensor and from the known or measured temperature difference between the membrane (2, 32, 62) and the frame (3, 33, 63) and the electrical power required to heat the membrane (2, 32, 62), in particular the thermal conductivity and/or the hydrogen content, the hydrocarbon gas content or the helium content of the fluid medium.

26. The method according to any one of claims 22 to 25, **characterized in that** the method is carried out with a sensor element (1, 31, 61) according to any one of claims 1 to 17 or with a sensor according to any one of claims 18 to 20.

27. The method according to any one of claims 22 to 26, **characterized in that** the temperature of the membrane (2, 32, 62) is controlled or regulated at least 5 °C and at most 200 °C above the temperature of the frame (3, 33, 63), preferably the temperature of the membrane (2, 32, 62) is controlled or regulated at least 10 °C and at most 150 °C above the temperature of the frame (3, 33, 63), most preferably the temperature of the membrane (2, 32, 62) is controlled or regulated at least 20 °C and a maximum of 100 °C above the temperature of the frame (3, 33, 63).

28. The method according to any one of claims 22 to 27, **characterized in that** the temperature of the membrane (2, 32, 62) is maintained at at least 201 °C and at most at 350 °C, preferably at at least 210 °C and at most at 300 °C, most preferably at at least 220 °C and at most at 260 °C.

29. The method according to any one of claims 22 to 28, **characterized in that** the temperature of the frame (3, 33, 63) is maintained at at least 135 °C and at most 199 °C, preferably at at least 150 °C and at most 195 °C, most preferably at at least 180 °C and at most at 190 °C.

**30.** The method according to any one of claims 22 to 29, **characterized in that** the temperature of the membrane (2, 32, 62) is controlled or regulated in such a way or the temperature of the membrane (2, 32, 62) and the temperature of the frame (3, 33, 63) are controlled or regulated in such a way, that the mean value of the temperature of the frame (3, 33, 63) and the temperature of the membrane (2, 32, 62) is at least 180 °C and at most 220 °C, preferably at least 190 °C and at most 210 °C, most preferably at least 195 °C and at most 205 °C.

**31.** The method according to any one of claims 22 to 30, **characterized in that** a temperature of a separate volume in the region of the frame (33, 63) is measured with a self-supporting wire (37), wherein the measured temperature of the self-supporting wire (37) is used for correction when determining the thermal property of the fluid medium, in particular the thermal conductivity and/or the hydrogen content, the hydrocarbon gas content or the helium content of the fluid medium, is used in step F).

**32.** The method according to any one of claims 22 to 31, **characterized in that**, for determining the temperature of the membrane (2, 32, 62) in step D), the same electrical heating element (8, 38) on the membrane (2, 32, 62) is used with which the membrane (2, 32, 62) is heated in step A).

**33.** The method according to any one of claims 22 to 32, **characterized in that** the temperature of the membrane (2, 32, 62) is kept constant by a first self-regulating Wheatstone bridge circuit, wherein the electrical heating element (8, 38) on the membrane (2, 32, 62) is part of the first self-regulating Wheatstone bridge circuit, and/or the temperature of the frame (3, 33, 63) is kept constant by a second self-regulating Wheatstone bridge circuit or by a digital or computer-controlled controller, wherein preferably at least one electrical resistance element (6, 7, 36) on the frame (3, 33, 63) and/or one electrical heating element (8, 38) on the frame (3, 33, 63) is part of the second self-regulating Wheatstone bridge circuit.

**34.** The method according to any one of claims 22 to 33, **characterized in that** a step H) is carried out:
H) increasing or controlling or regulating the temperature of the fluid medium in the region of a gas inlet to the membrane (2, 32, 62) in the cover (20, 50, 80) and/or increasing or controlling or regulating the temperature of the cover (20, 50, 80), wherein the cover (20, 50, 80) delimits a gas volume around the membrane (2, 32, 62) which is connected to the environment in a gas-permeable manner, preferably by regulating the electrical power for heating the frame (3, 33, 63) or a separate electrical resistance heating apparatus.

**35.** The method according to any one of claims 22 to 34, **characterized in that** the frame (3, 33, 63) is controlled or regulated to a temperature which is higher than the dew point temperature of the existing or possible condensation in the gas under investigation.

**Revendications**

**1.** Élément capteur (1, 31, 61) pour mesurer les propriétés thermiques d'un milieu fluide, en particulier pour mesurer la conductivité thermique et/ou la teneur en hydrogène gazeux, la teneur en hydrocarbures gazeux ou la teneur en hélium du milieu fluide, l'élément capteur (1, 31, 61) présentant une membrane (2, 32, 62), un couvercle (20, 50, 80) et un cadre (3, 33, 63), dans lequel le couvercle (20, 50, 80) est affleurant avec le cadre de sorte qu'ils forment une surface affleurante, dans lequel le cadre (3, 33, 63) entoure la membrane (2, 32, 62) sur au moins deux côtés, dans lequel la membrane (2, 32, 62) est séparée par endroits du cadre (3, 33, 63) par des évidements (4, 34), dans lequel la membrane (2, 32, 62) est autoportante et est reliée au cadre (3, 33, 63) par l'intermédiaire de nervures (5, 35), dans lequel le cadre (3, 33, 63) porte la membrane (2, 32, 62) par l'intermédiaire des nervures (5, 35), l'élément capteur (1, 31, 61) présentant en outre au moins un élément résistif électrique (6, 7, 36) sous forme d'au moins une piste conductrice sur le cadre (3, 33, 63) et un élément chauffant électrique (8, 38) sur la membrane (2, 32, 62) sous forme d'une piste conductrice sur la membrane (2, 32, 62), dans lequel l'élément chauffant électrique (8, 38) est contacté électriquement par l'intermédiaire de pistes conductrices de raccordement (9, 39), dans lequel les pistes conductrices de raccordement (9, 39) s'étendent à partir du cadre (3, 33, 63) via au moins l'une des nervures (5, 35) jusqu'à la membrane (2, 32, 62), dans lequel le cadre (3, 33, 63) présente un élément chauffant électrique (10, 40) sous forme d'une piste conductrice extérieure sur le cadre (3, 33, 63), dans lequel l'élément chauffant électrique (10, 40) du cadre (3, 33, 63) encadre à l'extérieur l'au moins un élément résistif électrique (6, 7, 36) sur le cadre (3, 33, 63) sur au moins deux côtés ou sur au moins trois côtés.

**2.** Élément capteur (1, 31, 61) selon la revendication 1, **caractérisé en ce que** la membrane (2, 32, 62) peut être chauffée avec l'élément chauffant électrique (8, 38) et la température de la membrane (2, 32, 62) peut être réglée par l'intermédiaire de la résistance électrique de l'élément chauffant électrique (8, 38), dans lequel l'élément capteur (1, 31, 61) présente de préférence un dispositif de chauffage réglable pour chauffer l'élément chauffant électrique (8, 38) et un dispositif de réglage de température de membrane pour régler la température de la membrane (2, 32, 62), dans lequel le dispositif de réglage de température de membrane est configuré pour déterminer la résistance électrique de l'élément chauffant électrique (8, 38).

3. Élément capteur (1, 31, 61) selon la revendication 1 ou revendication 2, **caractérisé en ce que** la température du cadre (3, 33, 63) peut être mesurée avec l'au moins un élément résistif électrique (6, 7, 36), dans lequel l'élément capteur (1, 31, 61) présente de préférence un dispositif de mesure de température de cadre pour mesurer la température du cadre (3, 33, 63), dans lequel le dispositif de mesure de température de cadre est de manière particulièrement préférée configuré pour déterminer la résistance électrique de l'au moins un élément résistif électrique (6, 7, 36).

4. Élément capteur (1, 31, 61) selon l'une quelconque des revendications précédentes, **caractérisé en ce que** la membrane (2, 32, 62) et le cadre (3, 33, 63) peuvent être chauffés indépendamment l'un de l'autre.

5. Élément capteur (1, 31, 61) selon l'une quelconque des revendications précédentes, **caractérisé en ce que** les nervures (5, 35) et la membrane (2, 32, 62) sont constitués du même matériau et sont conçus en une seule pièce, dans lequel la membrane (2, 32, 62) et les nervures (5, 35) sont constituées de nitrure de silicium ou d'oxyde de silicium.

6. Élément capteur (1, 31, 61) selon l'une quelconque des revendications précédentes, **caractérisé en ce que** le cadre (3, 33, 63) est constitué de silicium ou d'une céramique, en particulier constitué de silicium ou d'une céramique d'oxyde d'aluminium.

7. Élément capteur (1, 31, 61) selon l'une quelconque des revendications précédentes, **caractérisé en ce que** l'au moins un élément résistif électrique (6, 7, 36) est réalisé par au moins une piste conductrice métallique sur le cadre (3, 33, 63), dans lequel l'au moins une piste conductrice métallique est de préférence constituée d'un métal ou d'un alliage métallique avec un coefficient de température de la résistance électrique d'au moins 3 10-3 1/K ou de nickel, et/ou l'élément chauffant électrique (8, 38) est réalisé par une piste conductrice métallique sur la membrane (2, 32, 62), dans lequel la piste conductrice métallique est de préférence constituée d'un métal ou d'un alliage métallique avec un coefficient de température d'au moins 3 10-3 1/K ou de nickel.

8. Élément capteur (1, 31, 61) selon l'une quelconque des revendications précédentes, **caractérisé en ce**

**que** la membrane (2, 32, 62) n'est pas disposée dans une zone de bord de l'élément capteur (1, 31, 61) et est entourée de tous les côtés par le cadre (3, 33, 63), de préférence la membrane (2, 32, 62) est disposée dans une zone centrale de l'élément capteur (1, 31, 61).

9. Élément capteur (1, 31, 61) selon l'une quelconque des revendications précédentes, **caractérisé en ce que** le couvercle (20, 50, 80) limite un volume de gaz relié de manière perméable au gaz à l'environnement autour de la membrane (2, 32, 62).

10. Élément capteur (1, 31, 61) selon l'une quelconque des revendications précédentes, **caractérisé en ce que** l'élément capteur (1, 61) présente deux éléments de résistance électrique (6, 7) sous forme de deux pistes conductrices comme l'au moins un élément de résistance électrique (6, 7) sur le cadre (3, 63), dans lequel les deux éléments de résistance électrique (6, 7) entourent de préférence la membrane (2, 62) sur deux côtés opposés l'un à l'autre, de sorte que la membrane (2, 62) est disposée entre les deux éléments de résistance électrique (6, 7).

11. Élément capteur (1, 31, 61) selon l'une quelconque des revendications précédentes, **caractérisé en ce que** l'élément capteur (31, 61) présente un fil autoportant (37) comme résistance de référence, dans lequel le fil autoportant (37) est relié au cadre (3, 33, 63) aux deux extrémités et suspendu au cadre (33, 63) et est séparé du cadre (33, 63) par endroits dans l'espace par des évidements (43), dans lequel le fil autoportant (37) est de préférence entouré par le couvercle (50, 80), qui est solidaire du cadre (33, 63), dans lequel le couvercle (50, 80) est éloigné du fil autoportant (37) au moins par endroits dans l'espace, dans lequel le couvercle (50, 80) est de manière particulièrement préférée construit au moins par endroits comme un filtre perméable aux gaz (88, 98).

12. Élément capteur (1, 31, 61) selon l'une quelconque des revendications précédentes, **caractérisé en ce que** la membrane (2, 32, 62) est entourée sur au moins deux côtés par rapport au cadre (3, 33, 63) et au-dessus et en dessous de la membrane (2, 32, 62) par le couvercle (20, 50, 80), dans lequel le couvercle (20, 50, 80) est de préférence construit au moins par endroits comme un filtre perméable aux gaz (88, 98) et/ou est constitué au moins par endroits de silicium.

13. Élément capteur (1, 31, 61) selon l'une quelconque des revendications précédentes, **caractérisé en ce que** la piste conductrice extérieure de l'élément chauffant électrique (10, 40) sur le cadre (3, 33, 63) est plus large que les pistes conductrices de l'au moins un élément résistif électrique (6, 7, 36) sur le cadre (3, 33, 63) et de l'élément chauffant électrique (8, 38) sur la membrane (2, 32, 62).

**14.** Élément capteur (1, 31, 61) selon la revendication 13, **caractérisé en ce qu'**une partie exposée de la piste conductrice extérieure de l'élément chauffant électrique (10, 40) du cadre (3, 33, 63) passe dans un canal de fluide qui mène à un volume de fluide (22, 52, 82) entourant la membrane (2, 32, 62), dans lequel de préférence la partie exposée de la piste conductrice extérieure s'étend perpendiculairement au canal de fluide et/ou le canal de fluide est formé dans le couvercle (20, 50, 80) qui enserre la membrane (2, 32, 62), dans lequel le couvercle (20, 50, 80) couvre les autres zones de la piste conductrice extérieure.

**15.** Élément capteur (1, 31, 61) selon l'une quelconque des revendications précédentes, **caractérisé en ce que** l'au moins un élément résistif électrique (6, 7, 36) sur le cadre (3, 33, 63) et l'élément chauffant électrique (8, 38) sur la membrane (2, 32, 62) et, le cas échéant, l'élément chauffant électrique (8, 38) du cadre (3, 33, 63), sont contactés électriquement sur le cadre (3, 33, 63) par l'intermédiaire de champs de contact (12, 14, 16, 18, 42, 44, 46, 48, 78), dans lequel de préférence les champs de contact (12, 14, 16, 18, 42, 44, 46, 48, 78) sont conçus par des zones élargies des pistes conductrices et/ou les champs de contact (12, 14, 16, 18, 42, 44, 46, 48, 78) sont tous disposés sur un côté du cadre (3, 33, 63).

**16.** Élément capteur (1, 31, 61) selon l'une quelconque des revendications précédentes, **caractérisé en ce que** la membrane (2, 32, 62) a une surface de maximum 20 mm$^2$ , de préférence a une surface de maximum 1 mm$^2$, de manière particulièrement préférée a une surface de maximum 0,5 mm$^2$, idéalement a une surface de maximum 0,1 mm$^2$.

**17.** Élément capteur (1, 31, 61) selon l'une quelconque des revendications précédentes, **caractérisé en ce que** le cadre (3, 33, 63) avec la membrane (2, 32, 62) a un diamètre extérieur de maximum 10 mm dans le plan de la membrane (2, 32, 62), de préférence a un diamètre extérieur de maximum 3 mm, de manière particulièrement préférée a un diamètre extérieur de maximum 2 mm.

**18.** Élément capteur (1, 31, 61) selon l'une quelconque des revendications précédentes, **caractérisé en ce que** le couvercle (20, 50, 80) est chauffant, dans lequel de préférence le couvercle (20, 50, 80) avec l'élément chauffant électrique (10, 40) sur le cadre (3, 33, 63) est chauffant et/ou le couvercle (20, 50, 80) définit au moins une ouverture d'entrée de gaz (93, 94, 95, 96) de l'élément capteur (1, 31, 61) et la piste conductrice de l'élément chauffant électrique (10, 40) sur le cadre (3, 33, 63) est exposée dans l'au moins une ouverture d'entrée de gaz (93, 94, 95, 96).

**19.** Capteur pour déterminer les propriétés thermiques d'un milieu fluide, en particulier pour déterminer la conductivité thermique et/ou la teneur en hydrogène gazeux, la teneur en hydrocarbures gazeux ou la teneur en hélium d'un milieu fluide, le capteur présentant un élément capteur (1, 31, 61) selon l'une quelconque des revendications précédentes, dans lequel la membrane (2, 32, 62) avec l'élément chauffant électrique (8, 38) sur la membrane (2, 32, 62) peut être chauffée indépendamment de la température du cadre (3, 33, 63) ou la membrane (2, 32, 62) avec l'élément chauffant électrique (8, 38) sur la membrane (2, 32, 62) et le cadre (3, 33, 63) peuvent être chauffés indépendamment l'un de l'autre, dans lequel la température de la membrane (2, 32, 62) avec l'élément chauffant électrique (8, 38) sur la membrane (2, 32, 62) et la température du cadre (3, 33, 63) avec l'au moins un élément résistif électrique (6, 7, 36) peuvent être mesurées, dans lequel la température de la membrane (2, 32, 62) avec l'élément chauffant électrique (8, 38) sur la membrane (2, 32, 62) et la température du cadre (3, 33, 63) peuvent être régulées sur la base de la mesure des températures, dans lequel les puissances de chauffage nécessaires à cet effet peuvent être déterminées avec le capteur pour déduire les propriétés thermiques du milieu fluide, de préférence pour déterminer la conductivité thermique et/ou la teneur en hydrogène gazeux, la teneur en hydrocarbures gazeux ou la teneur en hélium du milieu fluide.

**20.** Capteur selon la revendication 19, **caractérisé en ce que** le capteur présente un montage en pont de Wheatstone qui est relié à l'élément chauffant électrique (8, 38) sur la membrane (2, 32, 62), de sorte que la puissance de chauffage de la membrane (2, 32, 62) puisse être régulée par l'intermédiaire du montage en pont de Wheatstone.

**21.** Capteur selon la revendication 19 ou revendication 20, **caractérisé en ce que** la membrane (2, 32, 62) peut être chauffée à des températures d'au moins 200 °C pendant le fonctionnement du capteur et/ou le cadre (3, 33, 63) peut être chauffé à au moins 130 °C pendant le fonctionnement du capteur, dans lequel la membrane (2, 32, 62) peut de préférence être chauffée à des températures d'au moins 220 °C pendant le fonctionnement du capteur et/ou le cadre (3, 33, 63) peut être chauffé à au moins 150 °C pendant le fonctionnement du capteur, dans lequel le cadre (3, 33, 63) peut être chauffé de manière particulièrement préférée à au moins 180 °C pendant le fonctionnement du capteur.

**22.** Procédé pour déterminer au moins une propriété thermique d'un milieu fluide, en particulier la conductivité thermique et/ou la teneur en hydrogène, la teneur en hydrocarbures gazeux ou la teneur en hélium du milieu fluide, le procédé présentant les étapes de :

A) chauffage d'une membrane (2, 32, 62) avec un élément chauffant électrique (8, 38) sous forme d'une piste conductrice disposée sur la membrane (2, 32, 62), dans lequel la membrane (2, 32, 62) est reliée par l'intermédiaire de nervures (5, 35) à un cadre (3, 33, 63) et est maintenue par le cadre (3, 33, 63) et

dans lequel la membrane (2, 32, 62) est entourée à l'intérieur d'un couvercle (20, 50, 80) par un volume (22, 52, 82) défini du milieu fluide, dans lequel le couvercle (20, 50, 80) est affleurant avec le cadre (3, 33, 63), de sorte qu'ils forment une surface affleurante ;

B) transfert de chaleur à partir de la membrane (2, 32, 62) et de l'élément chauffant électrique (8, 38) sur le milieu fluide entourant la membrane (2, 32, 62) ;

C) transfert de chaleur à partir du milieu fluide sur le cadre (3, 33, 63), dans lequel le cadre (3, 33, 63) a une température plus basse que la membrane (2, 32, 62) ;

D) détermination de la température de la membrane (2, 32, 62) et du cadre (3, 33, 63) ;

E) commande ou régulation de la température de la membrane (2, 32, 62) par une régulation de la puissance électrique pour chauffer la membrane (2, 32, 62) ; et

F) détermination de la propriété thermique du milieu fluide, en particulier de la conductivité thermique et/ou de la teneur en hydrogène, de la teneur en hybrocarbure gazeux ou de la teneur en hélium du milieu fluide, par la puissance électrique nécessaire pour réguler la température de la membrane (2, 32, 62) et par la différence de température connue entre la membrane (2, 32, 62) et le cadre (3, 33, 63) ; et

G) commande ou régulation de la température du cadre (3, 33, 63).

23. Procédé selon la revendication 22, **caractérisé par** une étape G) :
à l'étape G), la commande ou régulation de la température du cadre (3, 33, 63) s'effectue par une régulation de la puissance électrique pour chauffer le cadre (3, 33, 63).

24. Procédé selon la revendication 22 ou revendication 23, **caractérisé en ce que** la température de la membrane (2, 32, 62) est maintenue au-dessus de 200 °C et la température du cadre (3, 33, 63) est maintenue en dessous de 200 °C.

25. Procédé selon la revendication 22 ou revendication 23, **caractérisé en ce que** la membrane (2, 32, 62) et le cadre (3, 33, 63) font partie d'un capteur, dans lequel le capteur présente une géométrie constante et connue et un comportement de chauffage connu et dans lequel le capteur est calibré avant la mesure, afin de calculer à partir de la géométrie connue du capteur et de la différence de température connue ou mesurée entre la membrane (2, 32, 62) et le cadre (3, 33, 63) et de la puissance électrique nécessaire au chauffage de la membrane (2, 32, 62) la propriété thermique du milieu fluide, en particulier la conductivité thermique et/ou la teneur en hydrogène, la teneur en hydrocarbures gazeux ou la teneur en hélium du milieu fluide.

26. Procédé selon l'une quelconque des revendications 22 à 25, **caractérisé en ce que** le procédé est mis en oeuvre avec un élément capteur (1, 31, 61) selon l'une quelconque des revendications 1 à 17 ou avec un capteur selon l'une quelconque des revendications 18 à 20.

27. Procédé selon l'une quelconque des revendications 22 à 26, **caractérisé en ce que** la température de la membrane (2, 32, 62) est commandée ou régulée au moins 5 °C et au maximum 200 °C au-dessus de la température du cadre (3, 33, 63), de préférence la température de la membrane (2, 32, 62) est commandée ou régulée au moins 10 °C et au maximum 150 °C au-dessus de la température du cadre (3, 33, 63), de manière particulièrement préférée la température de la membrane (2, 32, 62) est commandée ou régulée au moins 20 °C et au maximum 100 °C au-dessus de la température du cadre (3, 33, 63).

28. Procédé selon l'une quelconque des revendications 22 à 27, **caractérisé en ce que** la température de la membrane (2, 32, 62) est maintenue à au moins 201 °C et au maximum à 350 °C, de préférence est maintenue à au moins 210 °C et au maximum à 300 °C, de manière particulièrement préférée est maintenue à au moins 220 °C et au maximum à 260 °C.

29. Procédé selon l'une quelconque des revendications 22 à 28, **caractérisé en ce que** la température du cadre (3, 33, 63) est maintenue à au moins 135 °C et au maximum à 199 °C, de préférence est maintenue à au moins 150 °C et au maximum à 195 °C, de manière particulièrement préférée est maintenue à au moins 180 °C et au maximum à 190 °C.

30. Procédé selon l'une quelconque des revendications 22 à 29, **caractérisé en ce que** la température de la membrane (2, 32, 62) est commandée ou régulée ou la température de la membrane (2, 32, 62) et la température du cadre (3, 33, 63) sont commandées ou régulées de sorte que la moyenne de la température du cadre (3, 33, 63) et de la température de la membrane (2, 32, 62) soit d'au moins 180 °C et de maximum 220 °C, de préférence soit d'au moins 190 °C et de maximum 210 °C, de manière particulièrement préférée soit d'au moins 195 °C et de maximum 205 °C.

31. Procédé selon l'une quelconque des revendications 22 à 30, **caractérisé en ce qu'**une température d'un volume séparé dans la zone du cadre (33, 63) est mesurée avec un fil autoportant (37), dans lequel la température mesurée du fil autoportant (37) est utilisée pour la correction lors de la détermination de la propriété thermique du milieu fluide, en particulier de la conductivité thermique et/ou de la teneur en hydrogène, de la teneur en hydrocarbure gazeux ou de la teneur en hélium du milieu fluide, à l'étape F).

32. Procédé selon l'une quelconque des revendications 22 à 31, **caractérisé en ce que** pour déterminer la température de la membrane (2, 32, 62) à l'étape D), le même élément chauffant électrique (8, 38) que celui avec lequel la membrane (2, 32, 62) est chauffée à l'étape A) est utilisé sur la membrane (2, 32, 62).

33. Procédé selon l'une quelconque des revendications 22 à 32, **caractérisé en ce que** la température de la membrane (2, 32, 62) est maintenue constante par un premier montage en pont de Wheatstone autorégulant, dans lequel l'élément chauffant électrique (8, 38) sur la membrane (2, 32, 62) fait partie du premier montage en pont de Wheatstone autorégulant, et/ou la température du cadre (3, 33, 63) est maintenue constante par un deuxième montage en pont de Wheatstone autorégulant ou par un régulateur numérique ou commandé par ordinateur, dans lequel de préférence au moins un élément résistif électrique (6, 7, 36) sur le cadre (3, 33, 63) et/ou un élément chauffant électrique (8, 38) sur le cadre (3, 33, 63) fait partie du deuxième montage en pont de Wheatstone autorégulant.

34. Procédé selon l'une quelconque des revendications 22 à 33 **caractérisé en ce qu'**une étape H) s'effectue :
H) l'augmentation ou la commande ou régulation de la température du milieu fluide dans la zone d'une entrée de gaz vers la membrane (2, 32, 62) dans le couvercle (20, 50, 80) et/ou l'augmentation ou la commande ou régulation de la température du couvercle (20, 50, 80), dans lequel le couvercle (20, 50, 80) limite un volume de gaz relié à l'environnement de manière perméable aux gaz autour de la membrane (2, 32, 62), de préférence par une régulation de la puissance électrique pour le chauffage du cadre (3, 33, 63) ou par un dispositif de chauffage électrique à résistance séparé.

35. Procédé selon l'une quelconque des revendications 22 à 34, **caractérisé en ce que** le cadre (3, 33, 63) est commandé ou régulé à une température qui est supérieure à la température de point de rosée de la condensation présente ou possible dans le gaz étudié.

Figur 1

Figur 2

A-A

Figur 3

Figur 4

Figur 5

Figur 6

Figur 7

Figur 8

Figur 9

**Wärmeleitfähigkeit vs. Temperatur**
Quelle: VDI-Wärmeatlas 6. Auflage

Figur 10

Figur 11

**IN DER BESCHREIBUNG AUFGEFÜHRTE DOKUMENTE**

**In der Beschreibung aufgeführte Patentdokumente**

- EP 0285833 A2
- DE 102015222072 A1
- DE 102016200267 A1
- US 201500972600 A1
- DE 10144873 A1
- DE 102005058832 B4
- JP 2010266265 A
- DE 102015207879 A1
- DE 102018119212 A1
- WO 2022106239 A1
- WO 2022268896 A